# EUROPÄISCHE PATENTSCHRIFT

(11) **EP 3 297 446 B1**
(45) Veröffentlichungstag und Bekanntmachung des Hinweises auf die Patenterteilung: **03.07.2024**
(21) Anmeldenummer: 16727280.6
(22) Anmeldetag: 18.05.2016
(51) Int. Cl.: A23B 4/044, A23B 4/056

(54) **ELEKTROSTATISCHE RÄUCHERANLAGE UND ELEKTROSTATISCHES RÄUCHERVERFAHREN**
ELECTROSTATIC SMOKER AND ELECTROSTATIC SMOKING METHOD
INSTALLATION DE FUMAGE ÉLECTROSTATIQUE ET PROCÉDÉ DE FUMAGE ÉLECTROSTATIQUE

(30) Priorität: 19.05.2015 CH 6942015; 27.05.2015 CH 7472015
(43) Veröffentlichungstag der Anmeldung: 28.03.2018
(73) Patentinhaber: Ecogold AG, 9472 Grabs (CH)
(72) Erfinder: GOLDENER, Ernst, 9465 Salez (CH); JUD, Daniel, 8880 Walenstadt (CH); MÜLLER, Beat, 7304 Maienfeld (CH); SULSER, Martin, 9476 Weite (CH)
(74) Vertreter: Swisspat Riederer Hasler Patentanwälte AG
(86) Internationale Anmeldenummer: PCT/CH2016/000079
(87) Internationale Veröffentlichungsnummer: WO 2016/183694

(56) Entgegenhaltungen:
- JP-A- 2000 070 759
- JP-A- 2000 175 772
- US-A- 3 503 760
- US-A- 6 103 190
- US-A1- 2009 120 781
- US-B1- 6 803 065
- Kfz-Technik Wiesinger: "Aufbau der Zündkerze", Google Suche "Aufbau einer Zündkerze" , XP002763131, Gefunden im Internet: URL:http://www.kfztech.de/kfztechnik/motor /otto/zuendung/aufbau_der_zuendkerze.htm [gefunden am 2016-10-18]

## Beschreibung

### TECHNISCHES GEBIET DER ERFINDUNG

Die Erfindung umfasst eine elektrostatische Räucheranlage, insbesondere zum Konditionieren und Aromatisieren von Lebensmitteln. Die Erfindung betrifft weiter ein elektrostatisches Räucherverfahren, welches zweckmässigerweise mit der vorgenannten Räucheranlage durchgeführt werden kann.

### HINTERGRUND DER ERFINDUNG

Das Räuchern ist ein Verfahren zur Konservierung bzw. Aromatisierung von Lebensmitteln, vorwiegend von Fisch und Fleisch. Hierbei gibt es verschiedene Verfahren und Prozessschritte.

Herkömmliche Anlagen sind z.B. in den Offenlegungsschriften DE 103 39 296 A1 und DE 260 00 81 A1 und der Patentschrift DE 197 34 802 C1 beschrieben. Eine herkömmliche Anlage besteht im wesentlich aus folgenden Teilen: einem oder mehreren Behand-Iungsräumen, in welche Lebensmittel mit einem Transportwagen eingebracht werden können (optional können die Transportwagen über ein Fördersystem durch die Anlage geleitet werden); einem Raucherzeuger, welcher das Behandlungsmedium erzeugt oder bereitstellt; Entfeuchtungs-, Kühl- und/oder Heizanlage, mit welchen das Behandlungsmedium konditioniert werden kann; einer Abgasreinigungsanlage, um die Emissionen (Rauch, Gerüche) möglichst gering zu halten; einer Steuerung, welche den gesamten Prozess steuert. Derartige Systeme können über verschiedenen Sensoren verfügen, so z.B. über eine Messstation für Kammertemperatur und Luftfeuchtigkeit sowie einen Kerntemperaturfühler. Eine Luftumwälzung wird zum Beispiel durch Blasdüsen oder Ventilatoren sichergestellt. Eine vollautomatische Reinigung der Anlage kann integriert sein.

Der Behandlungsraum besteht im wesentlich aus einem Raum, in welchen das Behandlungsgut eingefahren werden kann. Luft kann, zum Beispiel per Ventilator, angesaugt und ausgeblasen werden, sodass eine Strömung des Behandlungsmediums durch das Behandlungsgut erreicht wird. In der Strömung, z.B. zwischen dem Ventilator und dem Behandlungsgut, können optional Heizaggregate (elektrisch/dampf), Sprühnebeldüsen, Dampferzeuger und/oder Reinigungsdüsen platziert sein. Diese ermöglichen, die Temperatur, die Feuchte etc. zu variieren, um z.B. auch Brühprozesse durchzuführen. Im Behandlungsraum kann kontinuierlich die Temperatur, die Feuchtigkeit sowie die Kerntemperatur des Behandlungsgutes gemessen, um einen möglichsten optimalen Prozessablauf zu ermöglichen.

Raucherzeuger gibt es in verschiedene Ausführung z.B. Flüssigrauch, Reiberauch oder Glimmrauch, ggf. Reiberauch oder Glimmrauch in Kombination mit Flüssigrauch, etc. Raucherzeuger besitzen in der Regel einen Vor- und Rücklauf, so dass diese in einem geschlossen Kreislauf an den Behandlungsraum angeschlossen werden. Wird vom Prozess her Rauch angefordert, so wird das Behandlungsmedium z.B. über einen Ventilator in den Behandlungsraum gefördert. Vor- und Nachgeschaltet können sich Wärmetauscher befinden, um die Temperatur bzw. Feuchtigkeit anzupassen und gegebenenfalls gewisse Stoffe aus zu kondensieren.

Entfeuchtungs-, Kühl- und Heizanlagen werden gebraucht, um die Umluft für den entsprechenden Prozess zu konditionieren. So kann z.B. vor dem eigentlichen Raucheintritt die Luftfeuchte gesenkt und das Behandlungsgut kontrolliert aufgewärmt werden, damit das Behandlungsgut den Rauch besser annimmt und nicht auf der Oberfläche kondensiert.

Nach einigen Prozessschritten muss das Behandlungsmedium (d.h. Rauch, Wasserdampf, etc.) aus dem Behandlungsraum entfernt werden. Dies erfolgt bei einigen Anlagen mit Entfeuchtungs-/Kühl- und Heizungsanlage durch die Zuführung von eingedüstem Nebel, welcher sich dann auf dem Wärmtauscher niederschlägt. Oder es wird Frischluft angesaugt und das Behandlungsmedium aus der Behandlungskammer zur Abgasreinigung geleitet. Diese besteht in vielen Anlagen aus einem elektrostatischen Abscheider. Ebenfalls zum Einsatz kommen Aktivkohlefilter, welche vor allem zur Geruchsminderung eingesetzt werden.

Andere Räucherverfahren funktionieren mit Unterstützung von elektrostatischen Feldern bzw. Hochspannungselektroden und basieren darauf, dass die Partikel geladen und gezielt auf ein Behandlungsgut gebracht werden können. Wird ein scharfkantiger Gegenstand oder auch ein sehr dünnes Seil oder Draht mit Hochspannung beaufschlagt, so werden die elektrostatischen Feldstärken ab einer gewissen Spannung so hoch, dass es zu einer Coronaentladung (dabei wird Luft ionisiert) kommt. Diese geladenen Luftmoleküle bewegen sich dann zum Gegenpol. Treffen diese geladenen Luftmoleküle auf Partikel (Aerosolpartikel), so wird die Ladung auf die Partikel (insb. auf deren Oberfläche) übergeben, wodurch diese sich ebenfalls zum Gegenpol bewegen. Dieses Prinzip wird in der Technik z.B. bei den elektrostatischen Abscheidern verwendet oder in der Oberflächenbehandlung der Pulverbeschichtung. In der Nahrungsmittelindustrie werden gezielt bestimmte Substanzen auf ein Behandlungsgut gebracht, so z.B. der Reibrauch auf Fisch oder Fleisch. Diese Technik ist z.B. beschrieben durch Sikorski, Z. E. in Einige Probleme der elektrostatischen Rauchniederschlagung beim Räuchern, Nahrung, Band 6, Seiten 148-156 (1962) und durch Sikorski, Z. E. und Barylko-Pikielna N. in Die Qualität von elektrostatisch geräucherten Fischen und Würstchen, Deutsche Lebensmittel-Rundschau, Zeitschrift für Lebensmittelkunde und Lebensmittelrecht, Jahrgang 56, Heft 3, Seiten 65-69 (1960). Herkömmliche Anlagen sind z.B. in den Offenlegungsschriften EP 112 00 49 A1 und FR 276 50 77 A1 und den Patentschriften US 605 41 54 A, US 437 29 81 A, US 148 36 68 A und US 425 08 04 A beschrieben. Derartige herkömmliche Anlagen benötigen zusätzlich Abgasreinigungssysteme.

In der Patentschrift US 6,903,065 B1 werden Methode und Vorrichtung für die Herstellung von geräucherten Lebensmittel offenbart. In einem Beispiel (Fig. 12) erzeugt ein Raucherzuger Rauch, welcher, bevor er in die Behandlungskammer entlassen wird, ionisiert wird. Seitlich an der Behandlungskammer ist ein Zirkulationskanal vorgesehen, welcher einen oberen Teil der Behandlungskammer mit einem unteren Teil der Behandlungskammer verbindet. Ein im Kanal vorgesehener Ventilator wird derart betrieben, dass der Rauch aus der Behandlungskammer in das obere Ende des Zirkulationsrohrs abgezogen wird und aus dem unteren Ende des Zirkulationsrohr zurück in die Behandlungskammer geführt wird.

Die Probleme heutiger Anlagen liegen in der ungenügenden Gleichmässigkeit der Räucherung des Behandlungsgutes, insbesondere bei chargenweiser Behandlung, z.B. mit Transportwagen. Konsequenterweise ist somit auch die Reproduzierbarkeit problematisch, was sich bei Massewaren besonders negativ auswirkt. Zudem spielt beim Räucherprozess die Zeit eine grosse Rolle; besonders der Kalträucherprozess nimmt viel Zeit in Anspruch. Zudem sind die Abgase bzw. die Abluft zu reinigen bzw. zu rezyklieren, was zusätzliche Kosten und Zeit verursacht.

### AUFGABE

Daher ist es Aufgabe der vorliegenden Erfindung die Nachteile heutiger Systeme zu beseitigen oder zu mindern. Insbesondere ist es Aufgabe der vorliegenden Erfindung den Räucherprozess effizienter (insb. energie-, zeit- und kosteneffizienter) und die Ergebnisse des Räucherprozesses reproduzierbarer zu gestalten. Im Weiteren ist es eine Aufgabe der vorliegenden Erfindung, eine Räucheranlage bereitzustellen, welche ohne Abgasreinigungseinheit auskommt oder eine Abgasreinigung nur in reduziertem Masse verwendet. Insbesondere soll eine Räucherkammer bereitgestellt werden, welche einen schnellen und effizienten Räucherprozess erlaubt und möglichst keine Abgase oder lediglich vernachlässigbare Mengen an Abgasen an die Umwelt abgibt..

Die Aufgabe der Erfindung besteht deshalb auch darin, ein Räucherverfahren und dafür geeignete Räucheranlage bereitzustellen, in welchen die Abgasreinigung integriert ist.

Aufgabe der vorliegenden Erfindung ist es auch, die Effizienz des Räucherprozesses von Lebensmitteln, insbesondere von Fleisch- und Fischwaren, Käse und Kräutern, aber auch von Hölzer zu steigern.

Ziel der vorliegenden Erfindung ist es auch durch den Einsatz von ionisiertem Behandlungsmedium Effizienz und Qualität von Räucheranlagen und Räucherverfahren zu steigern. Es soll Kalt- und Heissräuchern gleichermassen möglich sein.

### ZUSAMMENFASSUNG DER ERFINDUNG

Diese und andere Ziele werden durch die Merkmale der unabhängigen Patentansprüche erreicht. Weiterbildungen und/oder vorteilhafte Ausführungsvarianten der Erfindung sind Gegenstand der abhängigen Patentansprüche.

Es wird eine elektrostatische Räucheranlage gemäss Anspruch 1 bereitgestellt, beinhaltend
- eine Kammer mit einer ersten Öffnung und einer zweiten Öffnung zur Durchströmung der Kammer mit einem Behandlungsmedium entlang einer Strömungsstrecke,
- in der Kammer auf der Strömungsstrecke einen Behandlungsraum, welcher für die Aufnahme von Behandlungsgut vorgesehen ist,
- einen Raucherzeuger zur Anreicherung des Behandlungsmediums mit Rauch,
- ein Führungssystem zur Beförderung das Behandlungsmediums in die Kammer hinein und aus der Kammer heraus,
- eine erste Elektrode, insbesondere eine erste Ionisationseinheit beinhaltend die erste Elektrode, zur Ionisierung des Behandlungsmediums,
wobei sich die Räucheranlage dadurch auszeichnet, dass
das Führungssystem mit einem Umlaufkanal ausgerüstet ist, welcher die erste Öffnung mit der zweiten Öffnung verbindet, und der Umlaufkanal derart angelegt ist, dass über diesen das Behandlungsmedium nach einem Durchlauf durch den Behandlungsraum für mindestens einen weiteren Durchlauf durch den Behandlungsraum erneut in den Behandlungsraum geführt werden kann, und der Umlaufkanal in Beziehung zur ersten Elektrode, insbesondere in Beziehung zur ersten Ionisationseinheit, derart angelegt ist, dass das Behandlungsmedium nach dem Durchlauf durch den Behandlungsraum über die erste Elektrode bzw. die erste Ionisationseinheit geführt wird, bevor das Behandlungsmedium erneut in den Behandlungsraum gelangt.

Diese Anordnung gewährt insbesondere eine einfache und vollständige Reinigung der Abluft noch innerhalb der Rauchgasanlage vor Abgabe an die Umgebung durch vollständige Abscheidung der im Behandlungsmedium enthaltenen Rauchpartikel während und nach der Durchführung eines Räucherprozesses.

Beispielsweise zeichnet sich die Räucheranlage weiter dadurch aus, dass
- zwecks Rauchaufnahme das Führungssystem mit einem ersten Zirkulationskanal (auch erster Umlaufkanal genannt) ausgerüstet ist, welcher die ersten Öffnung mit der zweiten Öffnung verbindet und mit einem Raucherzeuger in Verbindung steht (d.h. das Führungssystem mit einem ersten Zirkulationskanal zwischen der ersten Öffnung und der zweiten Öffnung zur Zirkulation des Behandlungsmediums aus dem Behandlungsraum via Raucherzeuger zurück in den Behandlungsraum ausgerüstet ist), und
- zwecks wiederholtem Zirkulierens (Totlaufens) das Führungssystem mit einem zweiten Zirkulationskanal (auch zweiter Umlaufkanal genannt) ausgerüstet ist, welcher die ersten Öffnung mit der zweiten Öffnung verbindet (d.h. das Führungssystem mit einem zweiten Zirkulationskanal zwischen der ersten Öffnung und der zweiten Öffnung zur Zirkulation des Behandlungsmediums aus dem Behandlungsraum zurück in den Behandlungsraum ohne Rauchaufnahme ausgerüstet ist).

In einer Ausführung kann die Räucheranlage weiter dadurch ausgezeichnet sein, dass
- die erste Elektrode, insbesondere die erste Ionisationseinheit, auf der Strömungsstrecke in der Kammer oder im Umlaufkanal derart angeordnet ist, dass die erste Elektrode bzw. die erste Ionisationseinheit vom Behandlungsmedium durchströmt bzw. angeströmt wird (z.B. mit jedem Umlauf durchströmt bzw. angeströmt wird).

Diese Anordnung sichert insbesondere eine gleichmässige Ionisation des dem Behandlungsgut zuströmenden Behandlungsmediums (d.h. der im Behandlungsmedium enthaltenen Rauchpartikel) bei der Durchführung eines Räucherprozesses.

In einer weiteren Ausführung kann die Räucheranlage weiter dadurch ausgezeichnet sein, dass
- die erste Elektrode, insbesondere die erste Ionisationseinheit, auf der Strömungsstrecke zwischen der ersten Öffnung und dem Behandlungsraum angeordnet ist,
- eine zweite Elektrode, insbesondere eine zweite Ionisationseinheit, auf der Strömungsstrecke in der Kammer oder im Umlaufkanal derart angeordnet ist, dass die zweite Elektrode bzw. die erste Ionisationseinheit vom Behandlungsmedium durchströmt bzw. angeströmt wird (z.B. mit jedem Umlauf durchströmt bzw. angeströmt wird).

Diese Anordnung sichert insbesondere grösste Flexibilität bei der Durchführung eines Räucherprozesses: Die Strömungsrichtung kann jederzeit Umgelenkt werden. Unabhängig von der Strömungsrichtung kann die eine oder andere Ionisationseinrichtung oder es können beide Ionisationseinrichtungen gleichzeitig aktiviert werden.

Zweckmässigerweise sind die erste Elektrode und die zweite Elektrode bzw. die erste Ionisationseinheit und die zweite Ionisationseinheit derart angeordnet, dass die erste Elektrode und die zweite Elektrode bzw. die erste Ionisationseinheit und die zweite Ionisationseinheit vom Behandlungsmedium durchströmt werden.

Merkmale der genannten Ausführungen können kombiniert werden. Weitere Merkmale der genannten Ausführungen sind im Folgenden beschrieben.

Vorzugsweise ist die erste Elektrode, insbesondere die erste Ionisationseinheit, auf der Strömungsstrecke zwischen der ersten Öffnung und dem Behandlungsraum für das Behandlungsgut angeordnet. Weiter bevorzugt ist - wenn vorhanden - die zweite Elektrode, insbesondere die zweite Ionisationseinheit, auf der Strömungsstrecke zwischen der zweiten Öffnung und dem Behandlungsraum für das Behandlungsgut angeordnet.

Zweckmässigerweise ist vorgesehen, dass der Umlaufkanal in Beziehung zur ersten Elektrode und/oder zweiten Elektrode, insbesondere in Beziehung zur ersten Ionisationseinheit und/oder zweiten Ionisationseinheit, derart angelegt ist, dass das Behandlungsmedium nach dem Durchlauf durch den Behandlungsraum über die erste Elektrode und/oder zweite Elektrode bzw. die erste Ionisationseinheit und/oder zweite Ionisationseinheit geführt wird, bevor das Behandlungsmedium erneut in den Behandlungsraum gelangt. Dadurch wird sichergestellt, dass das (wiedereinventilierte) Behandlungsmedium nach Austritt aus dem Behandlungsraum und somit vor erneutem Eintritt in den Behandlungsraum erst über zumindest eine der Ionisationselektroden geführt wird, zu welcher Gelegenheit das Behandlungsmedium erneut ionisiert wird.

Die Anlage ist vorzugsweise ausgestaltet, um zum einen das Behandlungsmedium auf die erste Elektrode und weiter durch den Behandlungsraum auf die zweite Elektrode zu führen und zum anderen in umgekehrter Richtung das Behandlungsmedium auf die zweite Elektrode und weiter durch den Behandlungsraum auf die erste Elektrode zu führen.

Das Führungssystem ist vorteilhafterweise derart ausgeführt, dass das Behandlungsmedium wahlweise oder wechselweise (alternierend) durch die erste Öffnung oder die zweite Öffnung in Richtung Behandlungsraum geleitet werden kann. Dies dient dem Zweck der Umkehrung der Strömungsrichtung.

Insbesondere soll das Behandlungsmedium von der ersten Öffnung her über die erste Elektrode bzw. die erste Ionisationseinheit oder von der zweiten Öffnung her gegebenenfalls über die zweite Elektrode bzw. die zweite Ionisationseinheit in bzw. durch den Behandlungsraum geführt bzw. geströmt werden können. Mit einer derartigen Ausführung der erfindungsgemässen Räucheranlage lässt sich eine gleichmässige Räucherung in kürzester Zeit verwirklichen.

Die erste Elektrode ist insbesondere Bestandteil einer ersten Ionisationseinheit und die zweite Elektrode ist insbesondere Bestandteil einer zweiten Ionisationseinheit.

Die Anlage ist vorteilhafterweise derart ausgestaltet, dass alternierend zum einen das Behandlungsmedium durch die erste Öffnung auf die erste Elektrode, insbesondere auf die erste Ionisationseinheit, und weiter durch den Behandlungsraum (gegebenenfalls auf die zweite Elektrode, insbesondere auf die zweite Ionisationseinheit (falls eine zweite Elektrode oder Ionisationseinheit vorliegt)) und weiter durch die zweite Öffnung strömen kann (bzw. geführt werden kann) und zum anderen in umgekehrter Richtung das Behandlungsmedium durch die zweite Öffnung (gegebenenfalls auf die zweite Elektrode bzw. Ionisationseinheit (falls eine zweite Elektrode bzw. Ionisationseinheit vorliegt)) und weiter durch den Behandlungsraum auf die erste Elektrode bzw. Ionisationseinheit und weiter durch die erste Öffnung strömen kann (bzw. geführt werden kann). Diese Vorgänge können wahlweise ausgewählt und durchgeführt werden oder laufen automatisch alternierend geregelt über eine Prozesssteuerung ab. Die Prozessteuerung ist zum Beispiel über Regelklappen im Führungssystem und Regelschalter für die Elektroden bzw. Regelschalter in den Ionisationseinheiten ausführbar.

Zweckmässigerweise ist das Führungssystem mit einem Zirkulationskanal ohne Raucherzeuger (d.h. der vorgenannte zweite Zirkulationskanal) zwischen der ersten Öffnung und der zweiten Öffnung zur Zirkulation des Behandlungsmediums aus dem Behandlungsraum zurück in den Behandlungsraum ohne Rauchaufnahme ausgerüstet. Bei der Zirkulation ohne Rauchaufnahme können die Rauchpartikel des Behandlungsmediums (zumindest rein optisch) innerhalb kürzester Zeit vollständig abgeschieden werden. Diese Art der Zirkulation ohne Rauchaufnahme wird im Weiteren hierin auch Totlaufen genannt. Dies ist insbesondere bei chargenweiser Beladung der Räucherkammer interessant. Eine Öffnung der Behandlungskammer ist somit praktisch direkt nach Abschluss eines Räucherschritts möglich. Unter Aktivierung beider Ionisationseinheiten während der Zirkulation kann die Ausfällzeit noch weiter gesteigert werden. Es ist somit auch keine Rauchabsaugung oder eine Rauchaufbereitung nachträglich nötig.

Die zumindest eine erste Elektrode und gegebenenfalls eine zweite Elektrode ist als Stabelektrode oder als Flächenelektrode ausgeführt.

Der zumindest einen ersten Elektrode und gegebenenfalls einer zweiten Elektrode ist zweckmässigerweise jeweils die als Gegenelektrode wirkende weitere Elektrode zugeordnet.

Die elektrostatische Räucheranlage beinhaltet zweckmässigerweise einen Isolator und eine Hochspannungsquelle für die zumindest erste Elektrode, bei Vorhandensein einer zweiten Elektrode zweckmässigerweise auch einen Isolator und eine Hochspannungsquelle für die zweite Elektrode.

Eine Ionisationseinheit ist vorzugsweise zumindest aus den folgenden Bausteilen aufgebaut: einer ersten Elektrode, insbesondere einer Hochspannungselektrode, vorzugsweise als Flächenelektrode ausgeführt; einer als Gegenelektrode wirkenden weiteren Elektrode, vorzugsweise ebenfalls flächig, z.B. als Gitter oder Netz, ausgeführt, insbesondere mit der genannten ersten Elektrode und deren Gegenelektrode in paralleler Konfiguration; einem Isolator für die erste Elektrode und einem Hochspannungsgenerator. Der Hochspannungsgenerator und die weiteren Bauteile der Ionisationseinheit sind vorzugsweise für Spannungen im Bereich von 5'000 bis 50'000 Volt ausgelegt. Aufgrund einer kompakten Bauweise einer Ionisationseinheit kann diese nahe am Behandlungsgut angeordnet werden. Vorteilhafterweise ist der Abstand von Elektrode und Gegenelektrode bis zum Produkt kleiner als 50 cm. Dieser kurze Weg bis zum Behandlungsgut wirkt sich auf den Abscheidungsprozess vorteilhaft aus.

Eine Ionisationseinheit zeichnet sich vorzugsweise dadurch aus, dass die Elektrode und gegebenenfalls deren Gegenelektrode als Flächenelektroden ausgeführt sind. Die als Flächenelektroden ausgeführte Elektrode und Gegenelektrode sind vorzugsweise im Wesentlichen gegeneinander parallel bzw. planparallel ausgerichtet und weisen eine Vielzahl von Durchströmungsaussparungen bzw. durchgängigen Ausnehmungen auf. Aufgrund der Durchströmungsaussparungen sind die Flächenelektroden durch das Behandlungsmedium durchströmbar bzw. die Aussparungen bieten dem Behandlungsmedium eine Vielzahl von durchströmbare Passagen. Die Durchströmungsaussparungen dienen zweckmässigerweise zur Durchströmung quer (vorzugsweise ungefähr senkrecht, z.B. in einem Winkelbereich von 45 bis 90 Grad, bevorzugt von 60 bis 90 Grad, weiter bevorzug von 95 bis 90 Grad) zur Flächenausdehnung von Elektrode und gegebenenfalls Gegenelektrode. Vorzugsweise sind die Elektrode und Gegenelektrode in im Wesentlichem senkrechter Richtung zu ihrer Flächenausdehnung durchströmbar Die erste Elektrode bzw. die Hochspannungselektrode weist vorzugsweise über ihre Flächenausdehnung eine Vielzahl von Erhebungen, z.B. Spitzen, auf, welche (zwecks Coronaentladung) zweckmässigerweise auf die Gegenelektrode gerichtet sind. Die Erhebungen weisen vorzugsweise gleiche Abmessungen auf. In jedem Fall sind die Erhebungen zweckmässigerweise auf jener Seite der Elektrode angelegt, welche zur gegenüberliegenden bzw. ihr zugeordneten Gegenelektrode gerichtet ist. Die Vielzahl von Erhebungen ist vorzugsweise möglichst gleichmässig über die gesamte Flächenausdehnung der Elektrode verteilt.

Die Gegenelektrode ist vorzugsweise als Gitter oder Netz ausgeführt, zweckmässigerweise mit im Vergleich zur Elektrode bzw. Hochspannungselektrode kleiner Oberfläche. Zweck der Gegenelektrode ist es einen elektrischen Gegenpol zur jeweiligen Elektrode zu bilden und dabei möglichst wenig Abscheidefläche zu bieten.

Eine zweckdienliche Ionisationseinheit für eine elektrostatische Räucheranlage ist vorzugsweise aufgebaut aus zumindest einer ersten Elektrode, insbesondere einer Hochspannungselektrode, welche als bevorzugt als Flächenelektrode ausgeführt ist, einer als Gegenelektrode wirkenden weiteren Elektrode, einem Isolator für die erste Elektrode und einer Spannungsquelle bzw. Hochspannungsquelle, insbesondere einem Spannungsgenerator bzw. Hochspannungsgenerator, zur Beaufschlagung der Elektrode mit einer Spannung bzw. Hochspannung. Die Ionisationseinheit mit Elektrode aber mit oder ohne Gegenelektrode ist bevorzugt als kompakte, gegebenenfalls austauschbare Einheit in die Räucheranlage eingesetzt.

Beispielsweise ist die als Flächenelektrode ausgebildete Elektrode in ihrer flächigen Ausdehnung strukturiert, z.B. indem sie als Drahtelektrode, als Sägezahnelektrode oder als Spitzenelektrode ausgebildet ist. Hierbei stehen die Sägezähne oder Spitzen gegebenenfalls im Wesentlichen perpendikulär aus der Grundebene der Elektrode ab bzw. hervor. Die Drähte sind in der Grundebene vorzugsweise voneinander beabstandet und/oder gegebenenfalls parallel zueinander ausgerichtet.

Gemäss einer bevorzugten Ausführungsform ist die Räucheranlage mit durchströmbarer Ionisationseinheit insbesondere derart aufgebaut, dass die durchströmbare Elektrode und die durchströmbare Gegenelektrode in der Räucherkammer in Strömungsrichtung vor dem Behandlungsgut angelegt sind, insbesondere ist bevorzugterweise die durchströmbare Elektrode vor der durchströmbaren Gegenelektrode angeordnet und die durchströmbare Gegenelektrode vor dem Behandlungsgut. Bezugsweise werden derartige Ionisationseinheit aktiviert, wenn die Durchströmrichtung entsprechend eingestellt ist.

Eine alternative oder zusätzliche Ionisationseinheit für eine elektrostatische Räucheranlage ist z.B. aufgebaut aus zumindest einer ersten Elektrode, insbesondere einer Hochspannungselektrode, einer als Gegenelektrode wirkenden weiteren Elektrode, einem Isolator für die erste Elektrode und einem Spannungsgenerator, vorzugsweise einem Hochspannungsgenerator zur Beaufschlagung der ersten Elektrode mit einer Spannung bzw. Hochspannung, und zeichnet sich dadurch aus, dass die erste Elektrode als Stabelektrode ausgeführt ist. Zweckmässigerweise ist die als Gegenelektrode wirkende weitere Elektrode als Rohr oder Rohrabschnitt, insbesondere als Rohrabschnitt eines Führungssystem für das Behandlungsmedium (vorzugsweise als Rohrabschnitt eines Umlaufkanals des Führungssystems), ausgeführt, wobei die als Stabelektrode ausgeführte erste Elektrode im Wesentlichen zentriert in der weiteren Elektrode angeordnet ist. Die als Stab ausgeführte erste Elektrode ist zweckmässigerweise mittels des Isolators von der weiteren Elektrode, d.h. der Gegenelektrode, elektrisch isoliert.

Der Raucherzeuger ist zweckmässigerweise mit einem Vorlauf und einem Rücklauf ausgestattet ist.

Raucherzeuger mit Vorlauf und Rücklauf und Fördersystem dienen zur Beförderung des Behandlungsmediums vom Raucherzeuger zur Kammer und aus der Kammer zurück in den Raucherzeuger. Bevorzugterweise ist das Führungssystem derart ausgestaltet, dass es die wahlweise oder wechselweise Beförderung des Behandlungsmediums sowohl von der ersten Öffnung und als auch von der zweiten Öffnung zurück in den Raucherzeuger erlaubt. Zweckmässigerweise ist das Führungssystem derart ausgestaltet, dass es die wahlweise oder wechselweise Beförderung des Behandlungsmediums vom Raucherzeuger zur ersten Öffnung und zur zweiten Öffnung der Kammer erlaubt.

In einer Ausführung des Fördersystems ist beispielsweise die Räucheranlage, insbesondere das Führungssystem zur wahlweisen oder wechselweisen Beförderung des Behandlungsmediums mit einem unidirektionalen Ventilator zur Strömungsumkehr ausgerüstet. Vorzugsweise ist der Ventilator in einem Kanal des Fördersystems angeordnet, wobei zwei Kreisläufe wechselweise über den Ventilator beströmt werden, wobei der erste Kreislauf das Behandlungsmedium durch die ersten Öffnung in die Behandlungskammer fördert und der zweite Kreislauf das Behandlungsmedium durch die zweite Öffnung in die Behandlungskammer fördert und durch die jeweils andere Öffnung wieder zurück zum Ventilator. Das Führungssystem mit unidirektionalem Ventilator ist zur wahlweisen oder wechselweisen Beförderung des Behandlungsmediums aus der Kammer zurück in den Raucherzeuger mit einem ersten Kanal (Führungsgang) zwischen der ersten Öffnung und dem Raucherzeuger und einem zweiten Kanal (Führungsgang) zwischen der zweiten Öffnung und dem Raucherzeuger ausgestattet, welche in einen gemeinsamen Rücklauf des Raucherzeugers münden.

In einer anderen Ausführung des Fördersystems ist beispielsweise die Räucheranlage zur wahlweisen oder wechselweisen Beförderung des Behandlungsmediums mit einem bidirektionalen Ventilator zur Strömungsumkehr ausgerüstet ist. Der bidirektionale Ventilator kann in der Räucherkammer oder im Führungssystem angeordnet sein. Vorzugsweise ist der Ventilator in der Kammer zwischen der ersten Öffnung und der ersten Ionisationseinheit oder zwischen der zweiten Öffnung und der zweiten Ionisationseinheit angeordnet.

Bei Ausstattung mit einem bidirektionalen Ventilator ist das Führungssystem zur wahlweisen oder wechselweisen Beförderung des Behandlungsmediums praktischerweise mit einem umkehrbaren, d.h. alternierendem Vor- und Rücklaufsystem des Raucherzeugers ausgerüstet. Dadurch kann das Fördersystem in Bezug auf die Komplexität der Strömungswege relativ einfach ausgebildet sein.

Die elektrostatische Räucheranlage ist zweckmässigerweise mit einer Prozesssteuerung ausgestattet, welche insbesondere Klappen im Fördersystem und die Aktivierung der ersten Elektrode bzw. der ersten Ionisationseinheit und die Aktivierung der zweiten Elektrode bzw. der zweiten Ionisationseinheit steuert.

Die Räucherkammer der erfindungsgemässen elektrostatischen Räucheranlage ist praktischerweise mit einem verschliessbaren Einlass und einem vorzugsweise Auslass zum Einbringen und Ausbringen des Behandlungsguts ausgestattet ist, wobei vorzugsweise der Einlass und der Auslass zum chargenweisen Einbringen und Ausbringen des Behandlungsguts per Transportwagen ausgebildet ist.

Die elektrostatische Räucheranlage ist vorzugsweise mit einer Abluftöffnung und/oder einer Frischluftzufuhr ausgestattet.

Die elektrostatische Räucheranlage kann weiter z.B. eine Entfeuchtungseinrichtung, eine Befeuchtungseinrichtung, eine Kühleinrichtung, und/oder eine Heizeinrichtung beinhalten. Diese Einrichtungen sind vorzugsweise in Strömungsrichtung zum Behandlungsgut hin vor der jeweiligen Ionisationseinheit angeordnet.

Optional kann im Führungssystem, bevorzugt im zweiten Zirkulationskanal, ein Filter, z.B. ein Elektrofilter, zur Reinigung bzw. zur zusätzlichen Ausscheidung der Abgase angeordnet sein.

In Anspruch 11 wird ein elektrostatisches Räucherverfahren bereitgestellt, beinhaltend die aufeinanderfolgenden Verfahrensschritte (a) Strömen eines nach Rauchaufnahme Rauch enthaltenden und ionisierten Behandlungsmediums über die Oberfläche eines Behandlungsgutes in einem Behandlungsraum einer Behandlungskammer, und (b) ein- oder mehrmaliges Zirkulieren (insbesondere mehrmaliges Zirkulieren) des Behandlungsmediums aus der Behandlungskammer durch einen Umlaufkanal zurück in die Behandlungskammer und über die Oberfläche des Behandlungsgutes im Behandlungsraum, wobei das Behandlungsmedium nach dem Durchlauf durch den Behandlungsraum über die erste Elektrode bzw. die erste Ionisationseinheit geführt wird, bevor das Behandlungsmedium erneut in den Behandlungsraum gelangt.

Zweckmässigerweise läuft das Zirkulieren, insbesondere das mehrmalige Zirkulieren, des Behandlungsmediums zum Beispiel zeitweise ohne (zusätzliche) Rauchaufnahme ab. Dabei können die Rauchpartikel im Wesentlichen vollständig abgeschieden werden. Beispielsweise läuft das ein- oder mehrmalige Zirkulieren des Behandlungsmediums ohne (zusätzliche) Rauchaufnahme, mit (zusätzlicher) Rauchaufnahme oder unter Kombination von Zirkulationsschritten mit und ohne (zusätzlicher) Rauchaufnahme ab.

Zweckmässigerweise läuft das Zirkulieren, insbesondere das ein- oder mehrmalige Zirkulieren, des Behandlungsmediums zum Beispiel zeitweise mit oder ohne (zusätzlicher) Rauchaufnahme unter Aktivierung mindestens einer ionisierenden Elektrode, welche im Zirkulationsweg angeordnet ist, ab. Dabei können die Rauchpartikel rasch und vollständig abgeschieden werden.

Bei mehrmaligem Zirkulieren des Behandlungsmediums durch den Behandlungsraum führt eine erneute Ionisation (bzw. wiederholte Ionisation) des Behandlungsmediums vor jedem erneuten Eintritt des Behandlungsmediums in den Behandlungsraum zu einer besonders intensiven, effektiven und effizienten Behandlung. Insbesondere kann durch die wiederholte Ionisation der Zustand des Behandlungsmediums eingestellt werden. Werden wiederholte Ionisation und Frischrauchaufnahme kombiniert können besonders stabile bzw. konstante Behandlungsbedingungen erzielt werden. Bevorzugterweise passiert somit das Behandlungsmedium vor einem wiederholten Durchlauf durch den Behandlungsraum zumindest eine Elektrode bzw. Ionisationseinheit und wird dabei ionisiert.

Beim Verfahrensschritt der Zirkulation des Behandlungsmediums ohne zusätzliche Rauchaufnahme unter Aktivierung mindestens einer ionisierenden Elektrode kann die mindestens eine aktivierte Elektrode in der Behandlungskammer in Strömungsrichtung dem Behandlungsgut vor- und/oder nachgestellt sein. Vorzugsweise ist zumindest eine aktivierte Elektrode in der Behandlungskammer oder im Einlassbereich zur Behandlungskammer in Strömungsrichtung dem Behandlungsgut vorgestellt. Diese Art der Zirkulation (d.h. Zirkulation ohne Rauchaufnahme) dient der möglichst vollständigen Abscheidung oder Nutzung des Aerosols und wird hierin auch Totlaufen genannt. Der Verfahrensschritt der Zirkulation zum Totlaufen ist insbesondere derart ausgelegt, dass auf eine Rauchgasabreinigungsanlage verzichtet werden kann.

Der Verfahrensschritt des Totlaufens (Zirkulation ohne Rauchaufnahme, vorzugsweise mehrmalige Zirkulation ohne Rauchaufnahme) wird zweckmässigerweise fortgeführt bis eventuelle Restpartikel (d.h. alle Partikel) im Umlauf, innerhalb oder auch ausserhalb der Behandlungskammer, abgeschieden sind, d.h. bis das Behandlungsmedium praktisch partikelfrei ist bzw. eine Partikelkonzentration von weniger als 100 mg/m³, vorzugsweise weniger als 1 mg/m³, erreicht wird. Danach kann dem Verfahrensschritt des Totlaufens ein Verfahrensschritt zum Ablassen des nun im Wesentlichen partikelfreien Behandlungsmediums über eine Abluftklappe folgen. Es ist wichtig, dass die Kammer in relativ kurzer Zeit "rauchfrei" wird, damit die Anlage möglichst effizient genutzt werden kann.

Je nach Ausführung der Anlage kann unter Rauchaufnahme (z.B. einer kontinuierlichen Rauchaufnahme) ein Umlenken der Strömungsrichtung in der Behandlungskammer in die Gegenrichtung vorgenommen werden. Insbesondere mehrmaliges Umlenken, bei gleichzeitigem Aktivieren einer ionisierenden Elektrode, welche (vorzugsweise in der Kammer oder im Einlassbereich vor der Kammer) in Strömungsrichtung vor dem Behandlungsgut angeordnet ist, bewirkt eine Effizienzsteigerung des Räucherprozesses.Gegebenenfalls kann eine ionisierenden Elektrode, welche in der Kammer in Strömungsrichtung nach dem Behandlungsgut oder im Kammerauslass angeordnet ist, deaktiviert werden.

Zusätzlich kann das elektrostatisches Räucherverfahren weiter einen Abgasreinigungsoption beinhalten, welche vorzugsweise während der Zirkulation (ohne Rauchaufnahme) aktivierbar ist.

Der Verfahrensschritt des Zirkulierens wird vorzugsweise fortgeführt bis im Wesentlichen alle Partikel abgeschieden sind bevor das Ablassen des Behandlungsmediums über eine Abluftklappe folgt.

Das elektrostatisches Räucherverfahren nach einem der vorangehenden Ansprüche, weiter beinhaltend zumindest einen Konditionierungsschritt aus der Gruppe beinhaltend Entfeuchten, Befeuchten, Kühlen und Heizen.

Die hierin beschriebene elektrostatische Räucheranlage eignet sich besonders zur Durchführung des hier ebenfalls beschriebenen Räucherverfahrens.

Die im Folgenden angeführten vorteilhaften Ausführungsvarianten führen allein oder in Kombination miteinander zu weiteren Verbesserungen der erfindungsgemässen elektrostatischen Räucheranlage.

### KURZBESCHREIBUNG DER FIGUREN

Weitere Vorteile und Merkmale der Erfindung ergeben sich aus der nachfolgend detaillierten Beschreibung einiger Ausführungsbeispiele. Ausführungsbeispiele der Erfindung werden nachfolgend anhand von Figuren beispielhaft beschrieben. Es zeigen in nicht massstabsgetreuer, schematischer Darstellung:
- Figur 1:: eine Behandlungskammer mit Anströmung (a) von oben, (b) von unten; eine weitere erfindungsgemässe Behandlungskammer mit Anströmung (c) von einer Seite (von links), (d) von der anderen Seite (von rechts); eine weitere alternative erfindungsgemässe Behandlungskammer mit Anströmung (e) von oben, (f) von unten;
- Figur 2:: eine erfindungsgemässe Räucheranlage (a) während einer Rauchphase, (b) während einer Trocknungsphase, jeweils mit Anströmung von unten;
- Figur 3:: eine erfindungsgemässe Räucheranlage (a) während einer Rauchphase mit Anströmung von oben, (b) während einer Trocknungsphase mit Anströmung von unten, (c) während einer Totlaufphase mit Anströmung von oben;
- Figur 4,: eine erfindungsgemässe Räucheranlage mit integriertem Elektrofilter (Einstellung: Totlaufphase und Anströmung von oben);
- Figur 5:: eine Ionisationseinheit: (a) schräge Ansicht, (b) Seitenansicht;
- Figur 6:: das Prinzip einer lonisationseinheit;
- Figur 7:: Ausführungsbeispiele einer Hochspannungselektrode mit Gegenelektrode, die Hochspannungselektrode als Flächenelektrode, in (a) mit Sägezahn und vier Isolatoren, in (b) mit Draht oder Feinseil und zwei Isolatoren und in (c) mit Spitzen und einem zentrischen Isolator; die Gegenelektrode jeweils als Gitter ausgeführt; und
- Figur 8:: Ausführungsbeispiele einer Hochspannungselektrode, wobei die Hochspannungselektrode als Stabelektrode ausgeführt ist, wie sie gemäss Fig. 1e, 1f oder Fig. 4 in einem Rohr Verwendung findet.

Im Folgenden können gleiche Bezugsziffern für gleiche oder funktionsgleiche Elemente in unterschiedlichen Figuren stehen. Ein zusätzlicher Apostroph kann zur Unterscheidung mehrerer gleicher, gleichartiger, funktionsgleicher oder funktionsähnlicher Elemente dienen.

### DETAILIERTE BESCHREIBUNG DER ERFINDUNG

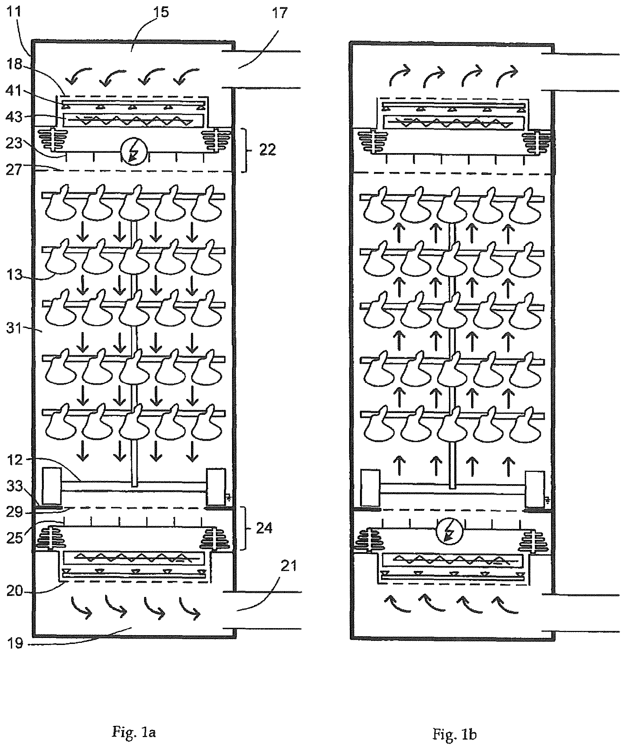

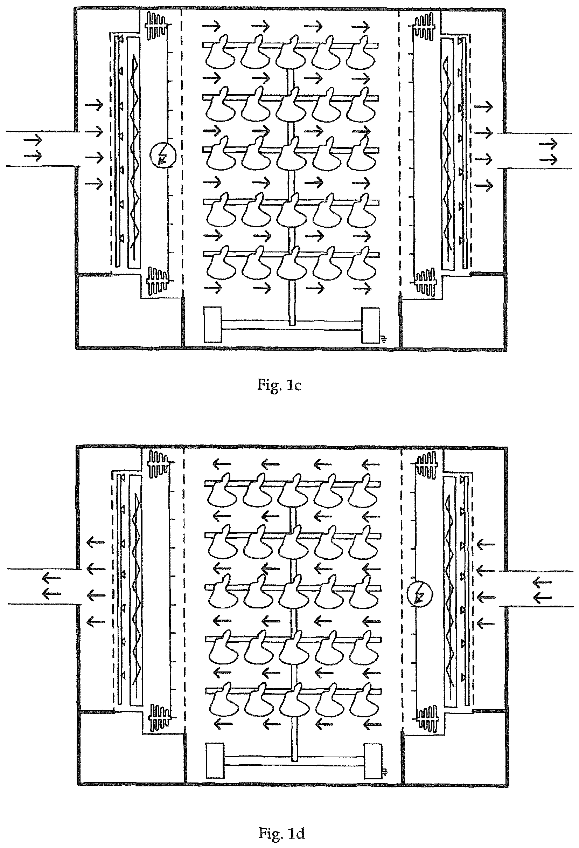

Die Erfindung bezieht sich auf eine Räucheranlage gemäß Anspruch 1 mit einem Behandlungsraum und einem Ionisationssystem (bestehend z.B. aus zumindest einer, bevorzugt zwei lonisationseinheiten) zur Ionisation und Ablagerung von Partikeln, insbesondere zum Abscheiden von Rauchpartikeln auf einem Behandlungsgut. In der Anlage werden Partikel, d.h. feste und/oder flüssige Aerosolpartikel, welche zusammen mit Gas, insbesondere Luft, das Behandlungsmedium bilden, durch mindestens eine Elektrode, insbesondere eine Hochspannungselektrode, ionisiert. Die Räucheranlage kann vorzugsweise mit einem Ein- oder Mehrwagensystem geladen werden. Das Behandlungsmedium kann hierbei vorzugsweise sowohl in einer Richtung und in deren Gegenrichtung (z.B. von oben als auch unten (Fig. 1a und 1b) oder alternativ von zwei gegenüberliegenden Seiten her (Fig. 1c und 1d)) über die Oberfläche des Behandlungsgutes geleitet werden. Bevorzugt ist ein alternierender Betrieb bei dem der Rauch alternierend von oben und von unten (Fig. 1a, 1b) oder von links und von rechts (Fig. 1c, 1d) eingeleitet wird. Optional können zur weiteren Konditionierung des Behandlungsgutes Heizgeräte, Sprühnebel, Dampferzeuger, etc. und/oder zur Wartung und Reinigung der Anlage z.B. Reinigungsdüsen eingebracht werden. Die Wände auf der Höhe der Wagen für das Behandlungsgut bzw. in der Nähe des Behandlungsgutes sind bevorzugterweise aus einem nicht elektrisch leitenden Material. Die Luftverteilung kann durch strömungsbeeinflussende Mittel, z.B. Blenden, Lochbleche und Lochgitter, positiv beeinflusst werden.

Fig. 1a und 1b zeigen je eine bevorzugte Räucherkammer 11 (geeignet für die beanspruchte Räucheranlage) beladen mit einem Wagen 12, welcher mit Behandlungsgut 13 bestückt bzw. behangen ist. Das Behandlungsgut beinhaltet zum Beispiel Fleischstücke, Fischstücke, Käsestücke, Tofustücke etc. Die Kammer 11 ist im oberen Bereich 15 mit einer ersten Öffnung 17 und im unteren Bereich 19 mit einer zweiten Öffnung 21 zur Durchströmung mit einem Behandlungsmedium, insbesondere von mit Rauchgas angereicherter Luft, ausgestattet. Der obere Bereich 15 und somit die erste Öffnung 17 befindet sich oberhalb des Wagens 12 bzw. des Behandlungsgutes 13. Der untere Bereich 19 und somit die zweite Öffnung 21 befindet sich unterhalb des Wagens 12 bzw. des Behandlungsgutes 13. Beim Durchströmen der Kammer 11 mit einem Behandlungsmedium bildet sich in der Kammer 11 zwischen den beiden Öffnungen 17 und 21 eine Strömungsstrecke aus, welche vorteilhafterweise derart ausgebildet und/oder geführt ist, dass sie durch das Behandlungsgut 13 führt, die einzelnen Stücke des Behandlungsgutes anströmend und umströmend. Die Behandlungskammer 11 ist insbesondere derart ausgeführt, dass sie wahlweise von oben (Fig. 1a) oder von unten (Fig. 1b) her, vorzugsweise alternierend, durchströmt werden kann.

Fig. 1c und 1d zeigen je eine horizontal ausgerichtete Variante einer weiteren Räucherkammer, (geeignet für die beanspruchte Räucheranlage) welche von oben und/oder von unten, beispielsweise alternieren, mit Behandlungsmedium durchströmt werden kann.

Um eine möglichst gelichmässige Strömung zu erhalten, können Leitbleche und/oder Lochbleche eingesetzt werden. In der Räucherkammer 11 (Fig. 1a) sind beispielsweise Lochbleche 18 und 20 vorgesehen. Das erste Lochblech 18 ist im oberen Bereich 15 auf der Strömungsstrecke des von der ersten Öffnung 17 einströmenden Behandlungsmediums angeordnet. Strömt ein Behandlungsmedium durch die erste Öffnung 17 ein (Fig. 1a), dann dient das erste Lochblech 18 dazu, das durch die Öffnung 17 einströmendes Behandlungsmedium derart zu verteilen, dass das Behandlungsgut 13 von oben her über den gesamten Räucherkammerquerschnitt möglichst gleichmässig angeströmt wird. Das zweite Lochblech 20 ist im unteren Bereich 19 auf der Strömungsstrecke des von der zweiten Öffnung 21 einströmenden Behandlungsmediums angeordnet. Wird die Strömungsrichtung auf ein Einströmen von unten gewechselt (Fig. 1b), dient das zweite Lochblech 20 dazu, das durch die zweite Öffnung 21 einströmende Behandlungsmedium derart zu verteilen, dass das Behandlungsgut 13 von unten her über den gesamten Räucherkammerquerschnitt möglichst gleichmässig angeströmt wird.

Zur Ionisation sind zweckmässigerweise eine erste Ionisationseinheit 22, insbesondere ausgeführt als erste Elektrode 23 mit einer ersten Gegenelektrode, auf der Strömungsstrecke zwischen erster Öffnung 17 und dem Behandlungsgut 13 und eine zweite lonisationseinheit 24, insbesondere ausgeführt als zweite Elektrode 25 mit einer zweiten Gegenelektrode, zwischen der zweiten Öffnung 21 und dem Behandlungsgut 13 angelegt. Die Elektroden 23 und 25 sind zweckmässigerweise als Hochspannungselektroden ausgelegt. Die jeweilige Gegenelektrode ist vorzugsweise zwischen der Elektrode 23 oder 25 (insb. Hochspannungselektrode) und dem Behandlungsgut 13 angeordnet. Besonders bewährt hat sich als Elektrode 23 eine Flächenelektrode mit Erhebungen (insbesondere Spikes, Nägel, Spitzen oder Stiften) und als Gegenelektrode ein Gitter 27, 29 oder Netz, das parallel zur Flächenelektrode zwischen der Elektrode 23 oder 25 und dem Behandlungsgut 13 bzw. dem Wagen 12, welcher das Behandlungsgut 13 trägt, angeordnet ist. Das Behandlungsgut 13 ist vorzugsweise geerdet, z.B. dadurch dass der Wagen 12, welcher das Behandlungsgut 13 trägt, geerdet ist.

Die Kammer 11 ist im Wesentlichen dreigeteilt (dreiteilig) ausgeführt. Ein erster, oberer Bereich 15 beinhaltet die erste Öffnung 17 und die erste Ionisationseinheit 22; ein zweiter, unterer Bereich 19 beinhaltet die zweite Öffnung 21 und die zweite Ionisationseinheit 24; der dritte, mittlere Bereich 31 (im Weiteren Zwischenbereich genannt) definiert einen Behandlungsraum, in welchem das Behandlungsgut, z.B. Stückgut per Wagen 13, positioniert werden kann. Der Wagen 12 kann z.B. auf einer Trasse oder Schiene 33 in die Kammer 11 und somit in den Behandlungsraum 31 auf Behandlungsposition eingefahren werden. Zwischen Bereichen der Trassen oder der Schienen 33 kann ein Laufgitter 29 angelegt sein, welches zum einen dem Bedienungspersonal erlaubt, die Kammer 11 zu betreten, und zweckmässigerweise zum anderen als Gegenelektrode zur zweiten Elektrode 25 wirkt.

Die Strömung, insbesondere z.B. deren Richtung, Verteilung, Art und Form, kann - wie oben beschrieben - durch Blenden oder andere Hindernisse in der Kammer 11 beeinflusst werden. Als vorteilhaft hat sich der Einsatz von Lochblechen erwiesen, welche im Wesentlichen quer zur Strömungsrichtung in Strömungsrichtung vor dem Behandlungsgut 13 in die Kammer 11 eingesetzt sein können. Da die Strömungsrichtung umkehrbar ist, kann z.B. unterhalb und oberhalb des Behandlungsgutes 13, d.h. bezüglich der Strömungsrichtung vor und nach dem Behandlungsgut 13, je ein Lochblech 18, 20 eingesetzt werden. Von Vorteil ist, wenn die jeweilige Ionisationseinheit 22, 24 stromabwärts einem Lochblech 18, 20 nachgestellt ist. Somit ist die erste Ionisationseinheit 22 im oberen Bereich 15 der Räucherkammer nach der ersten Öffnung 17 zwischen dem ersten Lochblech 18 und dem Behandlungsgut 13 angeordnet. Entsprechend ist die zweite Ionisationseinheit 24 im unteren Bereich 15 der Räucherkammer nach der zweiten Öffnung 21 zwischen dem zweiten Lochblech 20 und dem Behandlungsgut 13 angeordnet. Indem in Strömungsrichtung das Lochblech der Ionisationseinheit vorgestellt ist, kann die Ionisationseinheit über ihre gesamte Flächenausdehnung optimal gleichmässig angeströmt werden. Dadurch wird eine optimal gleichmässige Verteilung von Ladungen auf den Rauchpartikeln des Behandlungsmediums erreicht. Vorteilhafterweise weist damit das Behandlungsmedium auf der Strömungsstrecke durch das Behandlungsgut (d.h. im Zentralbereich 31 der Räucherkammer 11) im Strömungsquerschnitt nicht nur eine gleichmässige Strömungsverteilung sondern gleichzeitig auch eine gleichmässige Ladungsverteilung auf. Dadurch sind die Räucherbedingungen für alle Stücke eines Behandlungsgutes 13 optimal einheitlich. Weitere Konditionierungsmittel, wie z.B. Sprüheinrichtungen 41, sind vorteilhafterweise in Strömungsrichtung dem Lochblech nachgestellt und der Ionisationseinheit vorgestellt, d.h. zwischen Lochblech und Ionisationseinheit angeordnet.

Eine Baueinheit mit Elektrode, mit oder ohne Gegenelektrode und gegebenenfalls mit einem oder mehreren der Konditionierungsmittel, wie Heizeinrichtung, Sprüheinrichtung, Kühleinrichtung, Befeuchtungseinrichtung und Entfeuchtungseinrichtung, kann als kompakte, gegebenenfalls austauschbare Montageeinheit ausgeführt in eine Räucheranlage eingesetzt werden. Eine derartige Baueinheit kann gegebenenfalls auch in bestgehende Anlagen eingebaut werden.

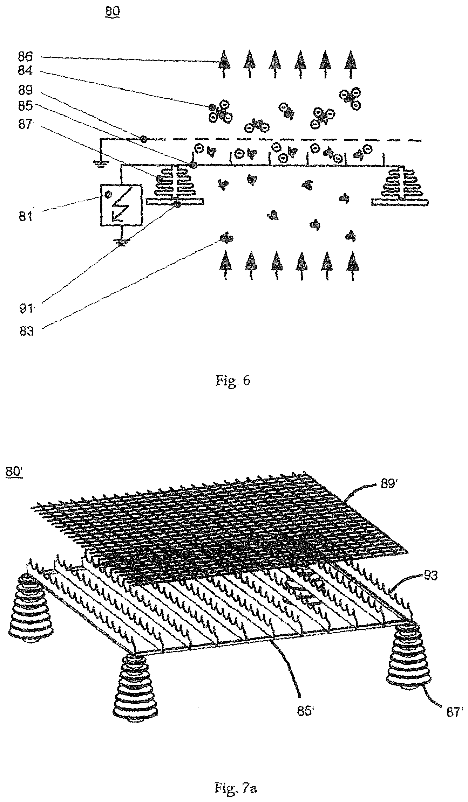

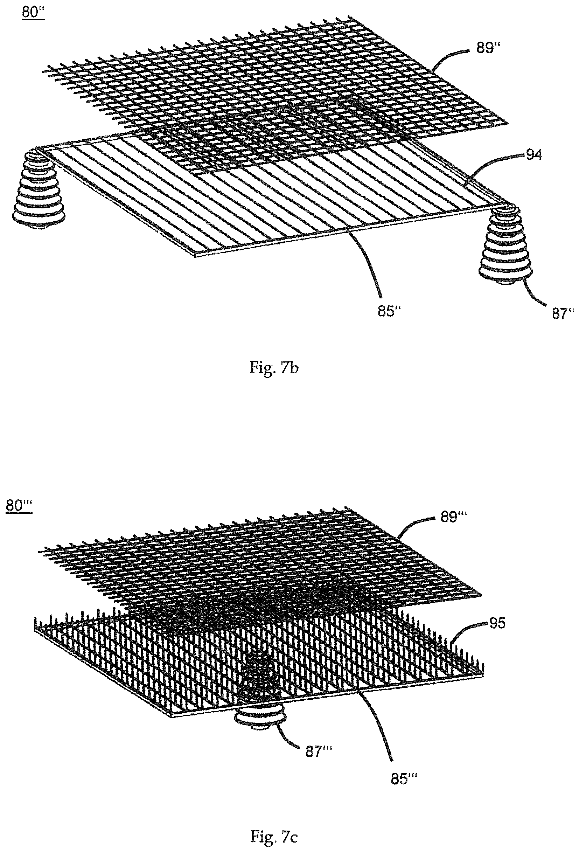

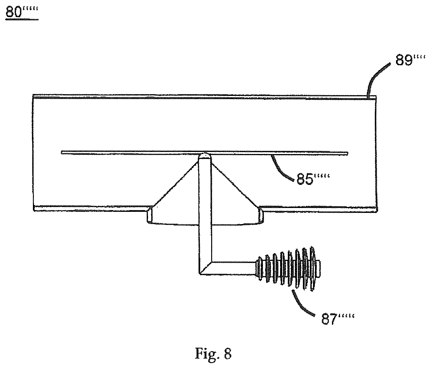

In Fig. 6 ist das Prinzip einer Ionisationseinheit bzw. Elektrodeneinheit dargestellt. In den Fig. 7 und 8 sind Ausführungsbeispiele einer Ionisationseinheit veranschaulicht. Eine Ionisationseinheit 80 besteht Grundsätzlich aus einer Hochspanungsquelle 81 (d.h. einem Hochspannungsgenerator), einem Hochspannungsisolator 87, einer Hochspannungselektrode 85 und einer Gegenelektrode 89 (Fig. 6). Der Hochspannungsgenerator 81 versorgt die Hochspannungselektrode 85 mit dem entsprechenden Potential. Die Hochspannungselektrode 85 ist über mindestens einen Isolator 87 gegenüber der restlichen Konstruktion elektrisch isoliert. Wird ein Isolator 87 mit Lamellen verwendet so können die Kriechströme bei zunehmender Verschmutzung und Feuchte reduziert und minimiert werden. Damit die Isolatoren 87 nicht von dem anströmenden Massestrom zu stark verschmutzen, können diese durch Blenden 91 oder Leitbleche vom Hauptmassestrom geschützt werden.

Die Ionisationseinheit 80 soll möglichst viele Ladungsträger 84 in das Behandlungsmedium abgeben. Sind im Behandlungsmedium Partikel 83, d.h. Feststoffpartikel, wie z.B. Rauch, oder Flüssigpartikel, wie z.B. Dampf, vorhanden, so werden diese beim vorbeiströmen an der Hochspannungselektrode 85 aufgeladen. Die Strömung des Behandlungsmediums ist anhand von einer Vielzahl gleichgerichteter Pfeile 86 dargestellt. Die aufgeladenen Partikel 84 sollen (insbesondere in der Strömungsrichtung) möglichst direkt auf das Behandlungsgut 13 geleitet werden, um eine Ablagerung auf Konstruktionsteilen zu minimieren.

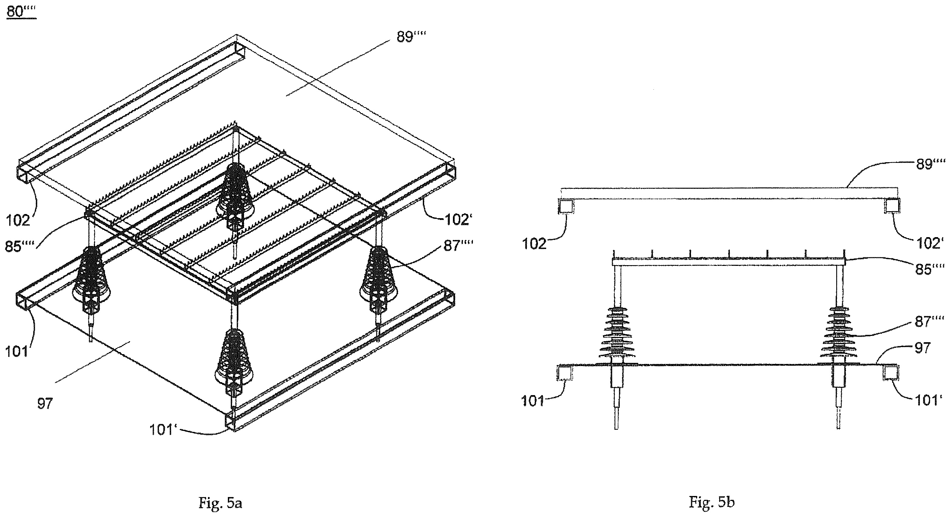

Die Ionisationseinheit 80 soll möglichst gleichmässig angeströmt werden. Dazu können gegebenenfalls die genannten strömungstechnischen Elemente wie Blenden, z.B. Loch- oder Leitbleche, eingesetzt werden. In Fig. 5 ist eine Ausführung einer Ionisationseinheit mit Lochblech 97 gezeigt. Hierbei bildet das Lochblech praktischerweise gleichzeitig die Stütze für vier lsolatoren 87"", welche die Elektrode tragen. Lochblech 97 und Gitter 89ʺʺ werden von Trägern 101, 101', 103, 103' getragen und sind über diese an den Kammerwänden befestigt. Optional könnten die Isolatoren 87ʺʺ auch über zusätzliche, andere Mittel an den Kammerwänden befestigt sein.

Die Hochspannungselektrode 85 sollte möglichst als Flächenelektrode aufgebaut werden, so dass eine Elektronenabgabe möglichst über eine grosse Fläche unter dem Behandlungsgut erfolgt. Die Hochspannungselektrode 85 kann als Sägezahnelektrode, Drahtelektrode, scharfkantigen Blech etc. ausgeführt werden. Ebenfalls kann die Elektrode in der Grundflächenform variieren (quadratisch, rechteckig, rund etc.). Beispielsweise spannt eine Flächenelektrode in der Ebene ihrer grössten Ausdehnung eine wirksame Fläche von mindestens 0,4 × 0,4 m² auf bei einer Anlage mit einem Querschnitt des Behandlungsraums für das Behandlungsgut von ca. 0,6 × 0,6 m². Hierbei ist insbesondere jener Querschnitt des Behandlungsraums gemeint, welcher in einer Ebene parallel zur Ebene der grössten Ausdehnung der Flächenelektrode liegt, bzw. welcher in einer Ebene senkrecht zur Durchströmungsrichtung liegt Im Allgemeinen liegt das Flächenverhältnis von Flächenelektrode zu Querschnittsfläche des Behandlungsraums für das Behandlungsgut im Bereich von 1 : 1 bis 1 : 3, vorzugsweise von 1 : 1 bis 1 : 2,5.

Damit die Elektrode 85 möglichst viele Elektronen emittiert ist eine Gegenelektrode 89, welche geerdet oder mit gegengesetztem Potential beaufschlagt ist, von Vorteil. Die Gegenelektrode 89 muss einen definierten Abstand zu Hochspannungselektrode 85 aufweisen. Die Gegenelektrode sollte möglichst flach aufgebaut werden, so dass diese zwar den elektrisch Gegenpol darstellt, zum anderen aber möglichst wenig Oberfläche zur Ablagerung der Partikel darstellt. Idealerweise kann dies ein elektrisch leitendes Gitter oder Netz sein. Wenn die Konstruktion begehbar sein soll, kann auch ein Gitterrost verwendet werden. Die Gegenelektrode ist somit quer zur Flächenausdehnung, insbesondere im Wesentlichem in senkrechter Richtung zu ihrer Flächenausdehnung durchströmbar.

In Fig. 7a ist eine Hochspannungselektrode 85' als Flächenelektrode mit Sägezahnleisten 93 und vier Isolatoren 87' an den Ecken dargestellt. Als Gegenelektrode 89' wird ein Gitter verwendet.

In Fig. 7b ist eine Hochspannungselektrode 85" als Flächenelektrode mit Draht oder Feinseil 94 mit zwei Isolatoren 87"dargestellt. Als Gegenelektrode 89" wird ein Gitter eingesetzt.

In Fig. 7c ist eine Hochspannungselektrode 85‴ als Flächenelektrode mit Spitzenaufsatz 95 (Nägel) mit einem zentrischen Isolator 87‴ in der Mitte dargestellt. Als Gegenelektrode 87‴ wird ein Gitter eingesetzt.

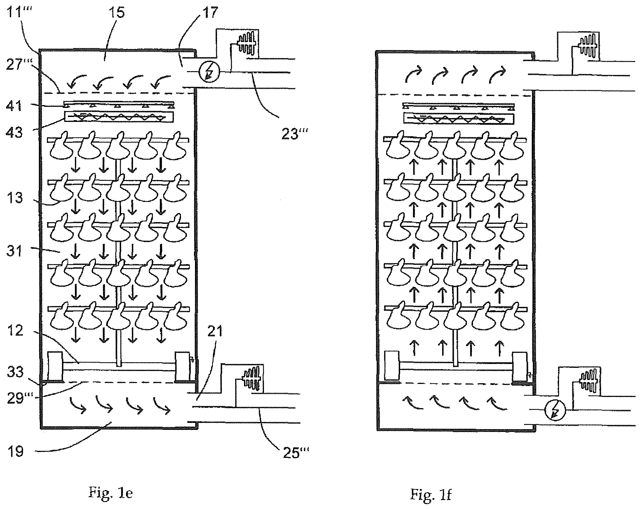

Gemäss eines alternativen Ausführungsbeispiels in Fig. 1e und Fig. 1f können anstatt der oben beschriebenen Flächenelektroden 23, 25 Stabelektroden 23‴, 25‴ verwendet werden. Die Stabelektroden 23'" und 25'" sind zum Beispiel zweckmässigerweise im Zu- und/oder Abführkanal, welcher jeweils zur bzw. aus der Kammer 11‴ führt, montiert. Bevorzugt werden im Speziellen Positionen der Stabelektroden 23‴ und 25‴ nahe der jeweiligen Kammeröffnung 17 und/oder 21. Die jeweilige Stabelektrode wird dabei vorzugsweise mittig im Kanalrohr positioniert und entlang der Rohrachse ausgerichtet. Aufgrund der Positionierung der Stabelektrode, 23‴ und/oder 25‴ im jeweiligen Kanalrohr kann eine homogene Ionisierung des Behandlungsmediums, welches den mit der Stabelektrode ausgerüsteten Kanalabschnitt passiert, erzielt werden. Auch wenn die ionisierende Stabelektrode 23‴, 25‴ ausserhalb der Kammer angeordnet ist, ist es vorteilhaft, wenn jeweils ein Lochblech 27‴ und/oder 29"' zur Strömungskontrolle im oberen und/oder unteren Kammerbereich 15, 19 angeordnet ist. Das Lochblech 27"' und/oder 29‴ kann, insbesondere jenes im unteren Bereich 19, gegebenenfalls als begehbares Gitter ausgestaltet sein. Als Gegenelektrode zu den Stabelektroden 23‴ und 25‴ kann z.B. ein um die Stabelektrode angeordneter Rohrabschnitt ausgebildet werden. Das in den Behandlungsraum 31 der Kammer 11‴ gestellte Behandlungsgut 13 kann von unten oder oben mit einem Behandlungsmedium beströmt werden. Die in Fig. 1e und 1f gezeigte Sprühdüse 41 und Heizung 43, welche im oberen Bereich 15 der Kammer 11‴ eingebaut sind, werden bevorzugterweise vor allem bei Einströmung eines Behandlungsmediums von oben aktiviert.

In Fig. 8 ist ein Ausführungsbeispiele einer Ionisationseinheit 80ʺ‴ mit Stabelektrode 85"'" veranschaulicht. Die Ionisationseinheit 80 beinhaltet (im Unterschied zu einer Ionisationseinheit mit Flächenelektrode), eine stabförmige Elektrode 85ʺ‴ (insb. eine stabförmige Hochspannungselektrode), welche in einem als Gegenelektrode 89ʺ‴ ausgeführtem Kanal bzw. Rohr gegenüber diesem elektrisch isoliert angeordnet ist. Die Hochspannungselektrode 85"'" ist über einen Isolator 87ʺ‴ gegenüber der restlichen Konstruktion, d.h. insbesondere gegenüber der Gegenelektrode 89"'", elektrisch isoliert angeordnet.

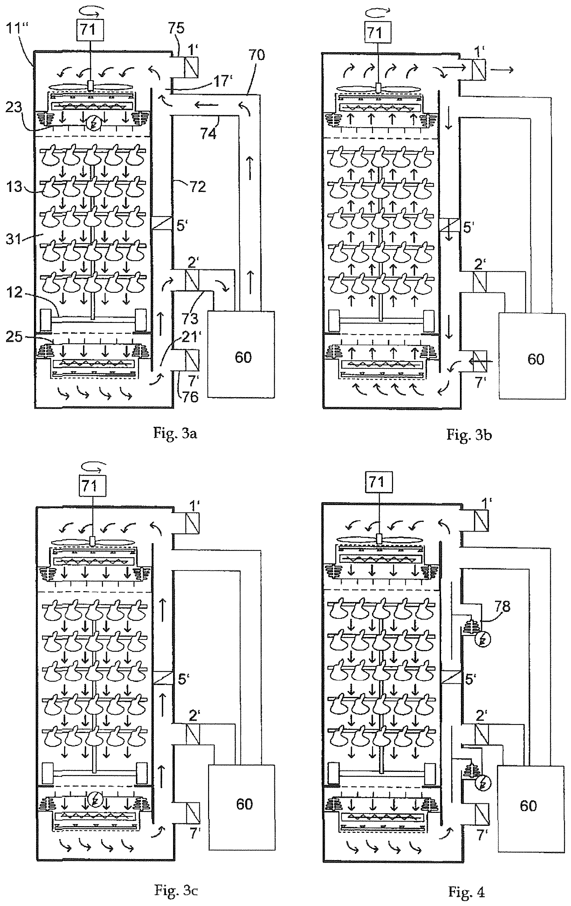

Ionisierende Flächenelektroden und Stabelektroden können gegebenenfalls in einer Anlage kombiniert verwendet werden. Ein entsprechendes Beispiel ist in Fig. 4 dargestellt. In diesem Fall werden die Flächenelektroden vor allem zur Ionisierung des in die Kammer einströmenden Behandlungsmediums eingesetzt, während die zusätzliche Stabelektrode 78 z.B. vorwiegend als integrierter Elektrofilter zur Restpartikelabscheidung und somit Abgasreinigung dient.

Ein Behandlungsmedium, insbesondere Rauch, welcher in einem Raucherzeuger erzeugt wird, wird durch die erste Öffnung 17 oder zweite Öffnung 21 in die Kammer 11 eingeströmt und nach Durchströmung des Behandlungsgutes 13 über die jeweils andere Öffnung, d.h. die zweite Öffnung 21 bzw. die erste Öffnung 17 ausgeströmt. Das Behandlungsmedium, insbesondere der Rauch, kann je nach Bedarf vor dem Durchströmen des Behandlungsgutes konditioniert werden und/oder nach dem Durchströmen des Behandlungsgutes zirkuliert und/oder aufbereitet werden. In einer bevorzugten Ausführung der Räucherkammer 11 sind eine Sprühdüse 41 zum Dampfeinlassen und eine Heizung 43 vor der jeweiligen Ionisationseinheit 22 und 24 vorgesehen. Je nach Bedarf kann das Behandlungsmedium oder dessen Zusammensetzung verändert werden. Ein Behandlungsschritt, welcher insbesondere unter Einsatz von Rauch als Behandlungsmedium abläuft, wird im Weiteren auch Rauchphase genannt. Ein Behandlungsschritt, welcher unter Einsatz von anders oder zusätzlich konditioniertem Behandlungsmedium abläuft, wird im Weiteren entsprechend seinem Zweck, z.B. Trockenphase oder Totlaufphase, benannt.

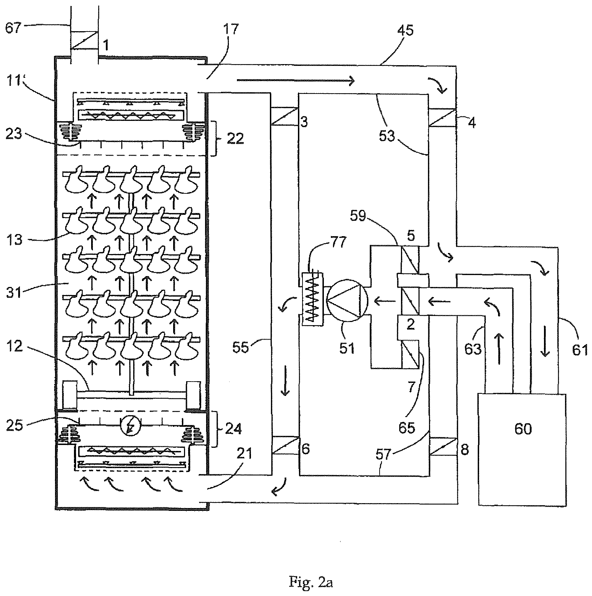

Bei der Einleitung der Rauchphase von oben wird die obere lonisationseinheit 22 aktiviert (z.B. Fig. 2a). Der Rauch eines Rauchererzeugers durchströmt Sprühdüsen und Dampfeinlass 41, die Heizung 41 und anschliessend die Hochspannungselektroden. Die Reihenfolge von Sprühdüsen, Dampfeinlass und Heizung ist im Prinzip beliebig, jedoch wird die vorgenannte Reihenfolge bevorzugt. Die durchströmenden Partikel werden an den Hochspannungselektroden durch die ionisierten Luftmoleküle aufgeladen. Wenn sich z.B. das Wagensystem 12 mit dem Behandlungsgut 13 auf dem Potential der Erde befindet bewegen sich die geladen Partikel des durchströmenden Behandlungsmediums vermehrt auf das Behandlungsgut hin und schlagen sich auf diesem nieder. Die geladen Partikel werden durch die elektrostatische Ladung zum geerdeten Behandlungsgut hingezogen. Die untere Ionisationseinheit 24, welche optional eingebaut sein kann, ist hierbei ausgeschaltet, sodass sich die Partikel möglichst nicht im Rohrsystem absetzen.

Um eine möglichst gleichmässige Räucherung des Behandlungsgutes zu erreichen, kann der Massestrom des Behandlungsmediums bei Bedarf umgekehrt werden. Dabei wird das Behandlungsgut durch den Rauch des Raucherzeugers von unten angeströmt. Hierbei ist vorzugsweise die untere Ionisationseinheit ein- und die obere ausgeschaltet.

Durch die ionisierten Rauchpartikel setzen sich mehr Partikel pro Zeit auf dem Behandlungsgut ab. Was dazu führt, dass die Rauchphase kürzer als bei Behandlung ohne Ionisation ausfällt. Nebst der Zeitersparnis weist das Behandlungsgut auch weniger Gewichtsverlust auf, da es weniger lang den erhöhten, trocknenden Temperaturen ausgesetzt war. Dies führt zu tiefen elektrischen Energie- und Personalkosten und mehr Produkteertrag.

Ebenfalls setzt sich der Rauch auch bei erhöhtem Feuchtegrad gleichmässiger auf dem Behandlungsgut ab. Dies führt zu einer Spreizung des möglichen Feuchtgrades während dem Rauchprozess. Ungleich feuchte Stellen auf dem Behandlungsgut werden gleichmässiger geräuchert, was die Qualität positiv beeinflusst.

Da sich der ionisierte Rauch sehr schnell auf den Oberflächen niederschlägt, kann die Rauchkammer vor dem Öffnen der Türe oder vor der Entleerung, sehr schnell rauchfrei gemacht werden, indem die Zuführung des Raucherzeugers geschlossen und beide Ionisationseinheiten 22, 24 einschaltet werden. Somit wird jede Fläche als Niederschlagselektrode genutzt und die Abgase werden Partikelfrei. Eine Abgasreinigungseinheit kann somit entfallen. Dies führt zu weniger Investitions- und Wartungskosten.

Während des Brühprozesses kann die jeweilige lonisationseinheit 22, 24 vor dem Behandlungsgut ebenfalls eingeschaltet werden. Flüssige Partikel können ebenfalls elektrostatisch geladen werden und verhalten sich ähnlich wie geladene feste Partikel. Der heisse Dampf kann hierbei noch gezielter auf das Behandlungsgut gebracht werden, was wiederum die Brühzeit herabsetzt.

Um eine Umkehr der Richtung des Partikelstroms bzw. der Durchströmung des Behandlungsmediums zu bewirken ist ein Führungssystem zur Beförderung des Behandlungsmediums vorgesehen. Das Führungssystem besteht aus einer Vielzahl von Kanalgängen (im Weiteren Kanäle genannt) und einer Vielzahl von Srömungsregelklappen, über welche die Durchströmung der Kanäle geregelt wird.

Ein bevorzugtes Führungssystem (hier auch Luftführungssystem genannt) für das Behandlungsmedium zum alternierenden Betrieb der Räucheranlage (unter Umkehrung der Durchströmungsrichtung in der Räucherkammer während der Rauchphase) beinhaltet vorzugsweise Vor- und Rücklauf zum Raucherzeuger. Das Führungssystem ist dabei derart ausgeführt, dass der Vorlauf alternierend zur ersten Öffnung 17 der Räucherkammer 11 und zur zweiten Öffnung 21 der Räucherkammer 11 hin geführt werden kann, bzw. dass der Rücklauf entsprechend alternierend aus der zweiten Öffnung 21 und der ersten Öffnung 17 der Rauchkammer 11 zum Raucherzeuger zurückgeführt werden kann.

Ein Führungssystem ist vorzugsweise derart ausgebildet, dass als Ansaugstelle zwischen Raucherzeuger, Frischluft oder Umluft, insbesondere Umluft ohne Rauchaufnahme, umgeschaltet werden kann.

Das Führungssystem ist vorzugsweise derart ausgeführt, dass in einem Umluftmodus, d.h. Zirkulationsmodus, das Behandlungsmedium, insbesondere - ohne zusätzlichen Rauch aufzunehmen - durch Räucherkammer und Führungssystem mehrmalig zirkulieren kann, wobei die Zirkulationsrichtung vorzugsweise alternierend bzw. umkehrbar ist.

Das Führungssystem ist vorzugsweise derart ausgeführt, dass ein Umluftmodus, insbesondere ein Umluftmodus ohne Rauchaufnahme, mit einer Ionisierung (z.B. einer der genannten lonisierungseinheiten oder einer weiteren Ionisierungseinheit im Führungssystem selbst) kombiniert werden kann, welche zur Restpartikelabscheidung im Umlaufkanal, d.h. im Zirkulationsgang, führt.

Das Führungssystem umfasst vorzugsweise zumindest eine Frischluftklappe zur Einstellung der Frischluftzufuhr, eine Umluftklappe (d.h. Zierkulationsklappe) zur Einstellung des Umluftmodus, eine Rauchklappe zur Einstellung der Rauchzufuhr und eine Abluftklappe zur Einstellung des Abluftabgangs.

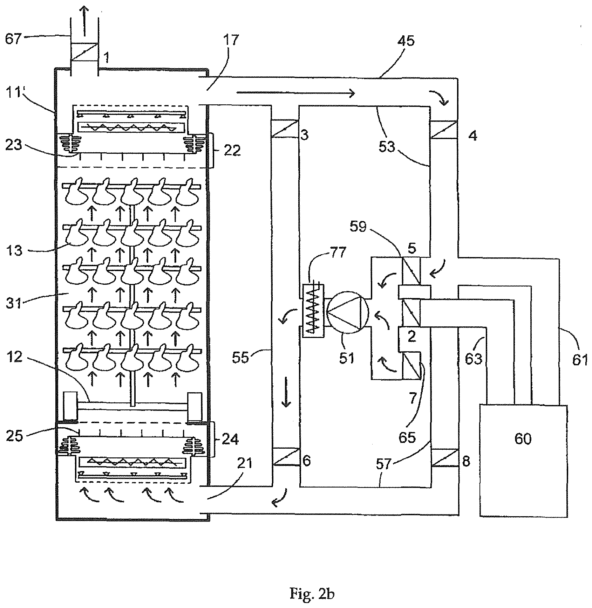

Im Folgenden werden zwei Führungssystemvarianten anhand von schematischen Darstellungen vorgestellt: eine Variante für den alternierenden Betrieb mit unidirektionalem Ventilator (Fig. 2) und eine andere Variante für den alternierenden Betrieb mit bidirektionalem Ventilator (Fig. 3 und 4).

Das Führungssystem 45 (d.h. Luftführungssystem) für das Behandlungsmedium, wie es in den Fig. 2a und 2b dargestellt ist, dient zur Beförderung des Behandlungsmediums mit oder ohne Rauchaufschlag mittels eines unidirektional gerichteten Ventilators 51. In der vorliegenden Ausführung ist der unidirektional gerichtete Ventilator ausserhalb der Kammer 11' in das Führungssystem 45 integriert. Die erste und die zweite Öffnung 17, 21 sind über zwei Zirkulationswege im Führungssystem miteinander verbunden. Der erste Zirkulationsweg führt von der ersten Öffnung 17 über einen ersten Kanal 53 zum unidirektionalen Ventilator 51, welcher in diesem Kanal saugend wirkt, und führt nach dem Ventilator 51 über einen zweiten Kanal 55, welcher in diesem Kanal blasend wirkt, zur zweiten Öffnung 21. Der zweite Zirkulationsweg führt von der zweiten Öffnung 21 über einen dritten Kanal 57 zum unidirektionalen Ventilator 51, welcher in diesem Kanal saugend wirkt, und führt nach dem Ventilator 51 über den vorgenannten zweiten Kanal 55 zur ersten Öffnung 17. Der erste Kanal 53 sowie der dritte Kanal 57 weisen beide eine Strömungsregelklappe auf. Abhängig davon aus welcher der beiden Öffnungen 17 oder 21 angesaugt werden soll, ist entweder die Klappe 4 im ersten Kanal 53 oder die Klappe 8 im dritten Kanal 57 offengestellt. Der zweite Kanal 55 weist zwei Klappen auf, Klappe 3 und Klappe 6, wobei Klappe 3 zwischen dem Ventilator 51 und der ersten Öffnung 17 und Klappe 6 zwischen dem Ventilator 51 und der zweiten Öffnung 21 angelegt ist. Der zweite Kanal 55 führt somit nach Passage des Ventilators 51 zurück zur ersten oder zweiten Öffnung 17 oder 21, abhängig davon, welche der beiden Klappen 3 oder 6 offengestellt ist. Der erste Kanal 53 und der dritte Kanal 57 laufen zusammen und leiten über eine Transferkanal 59 mit Klappe 5 weiter zum Ventilator 51. Ist Klappe 5 geöffnet, kann eine einfache oder alternierende Zirkulation des Behandlungsmediums ohne Rauchaufnahme durchgeführt werden. Alternativ leiten der erste Kanal 53 und der dritte Kanal 57 zwecks Rauchaufnahme über einen gemeinsamen Rauchrücklaufkanal 61, der Raucherzeuger 60 und einen Rauchvorlaufkanal 63 zum Ventilator 51. Eine Klappe 2 im Vorlaufkanal 63 regelt den Durchfluss durch den Vorlaufkanal und somit effektiv die Rauchzufuhr bzw. die Rauchaufnahme durch das Behandlungsmedium. Stromaufwärts vor dem unidirekten Ventilator 51 und stromabwärts nach Klappe 5 (welche der Regelung der Zirkulation ohne Rauchzufuhr dient) und Klappe 2 (welche der Regelung der Rauchzufuhr und somit bei der Regelung der Zirkulation unter Rauchzufuhr mitwirkt) ist vorzugsweise ein Frischluftzulass 65 vorgesehen. Der Frsichluftzulass 65 ist über Klappe 7 (Frischluftklappe) regelbar. Eine Abluftablass 67 mit Abluftklappe 1 ist vorzugsweise in der Wand der Räucherkammer 11' angelegt. Über die Abluftklappe 1 wird insbesondere das Ablassen von Abluft geregelt. Zweckmässigerweise sind Frischluftzulass 65 und Abluftablass 67 in unter Ventilatorbetrieb immer beströmten Bereichen der Räucheranlage angelegt und können daher jederzeit über die jeweilige Klappen 1 und 7 wirkungsvoll aktiviert werden.

Das Führungssystem 70 (i.e. Luftführungssystem) für das Behandlungsmedium, wie es in den Fig. 3a, 3b, 3c und 4 dargestellt ist, dient zur Beförderung des Behandlungsmediums mit oder ohne Rauchaufschlag mittels eines bidirektional gerichteten Ventilators 71. In der vorliegenden Ausführung ist der bidirektional gerichtete Ventilator in der Kammer 11" zwischen der ersten Öffnung 17' und der ersten Ionisationseinheit 23 angelegt, um den Strom des Behandlungsmediums möglichst gleichmässig zwischen den einzelnen Stücken des Behandlungsguts 13 nach unten zur zweiten Ionisationseinheit 25 und zur zweiten Öffnung 21' durchzublasen. Die erste und die zweite Öffnung 17' und 21' sind über einen Zirkulationskanal 72 oder auch Umlaufkanal genannt direkt verbunden. Durch Offenstellung der Klappe 5' (Umlaufklappe), welche im Umlaufkanal 72, vorzugsweise mittig auf halbem Wege zwischen der ersten und der zweiten Öffnung, angeordnet ist, wird gegebenenfalls die Zirkulation des Behandlungsmediums ohne Rauchaufnahme zugelassen. Jeweils ein aus dem Zirkulationskanal 72 abzweigender Kanal 73, 74 unterhalb und oberhalb der Umlaufklappe 5' führt zum Raucherzeuger 60. Die beiden Kanäle 73 und 74 bilden somit einen weiteren Zirkulationsweg bzw. Zirkulationskanal, welcher im Unterschied zum Zirkulationsweg durch Kanal 72 über einen Raucherzeuger verläuft. In einem oder beiden dieser Kanäle 73 und 74 ist vorzugsweise zumindest eine Klappe 2' (Rauchklappe) angelegt, welche den Durchstrom über den Raucherzeuger 60 regelt. Wenn die Umlaufklappe 5' geschlossen ist und die Rauchklappe 2' geöffnet ist, zirkuliert das Behandlungsmedium über den Raucherzeuger von der ersten zur zweiten Öffnung oder umgekehrt, abhängig davon in welche Richtung der Ventilator die Strömung leitet. Eine Abluftöffnung 75 mit Abluftklappe 1' ist vorzugsweise in der Wand der Räucherkammer 11" vorhanden. Über die Abluftklappe 1' wird insbesondere der Ablass von Abluft geregelt. Ein Frischluftzulass 76 mit Klappe 7' (Frischluftklappe) ist ebenfalls in der Wand der Kammer 11" vorgesehen. Vorzugsweise sind Frischluftzulass 76 und Abluftablass 75 in direktem Strömungskontakt mit dem Behandlungsraum der Kammer 11" und können daher jederzeit über die jeweilige Klappe 7' und 1' wirkungsvoll aktiviert werden. Zweckmässigerweise sind Frischluftzulass 76 und Abluftablass 75 in unter Ventilatorbetrieb immer beströmten Bereiche der Räucheranlage angelegt, bevorzugt insbesondere in Strömungsrichtung gesehen an unterschiedlichen Enden der Kammer 11".

Ein alternierender Betrieb der Räucheranlage gemäss Fig. 3 (unter Umkehrung der Durchströmungsrichtung in der Räucherkammer 11" während der Rauchphase) wird insbesondere dadurch erreicht dass, die Möglichkeit einer Strömungsumkehr, insb. per bidirektionalem Ventilator, im Führungssystem 70 in Kombination mit einem alternierenden Aufbau von Vor- und Rücklauf (Kanäle 73 und 74) des Raucherzeugers 60 gegeben ist.

### Anwendungsbeispiel 1: Alternierender Betrieb mit unidirektionalem Ventilator:

Für den alternierenden Betrieb einer Räucheranlage gemäss Fig. 2 kann der Raucherzeuger wie folgt angeschlossen werden.

Im Zentrum steht der unidirektionale Ventilator 51, welchem optional ein Heizelement 77, Sprühdüse und Dampfaggregat nachgeschaltet werden kann. Als Ansaugstelle kann der Ventilator 51 zwischen Rauchaufnahme (Raucherzeuger 60, Klappe 2), Frischluft (Klappe 7) oder Umluft (Klappe 5) umschalten. Die Klappen 3, 4, 6, 8 bilden eine Umschaltung, welche Anströmung von oben oder unten ermöglicht.

### Rauchphase - Anströmung von oben

Dabei sind die Klappen 3 und 8 offen, 4 und 6 geschlossen. Es entsteht ein geschlossener Kreislauf bei dem der Ventilator 51 das Behandlungsmedium vom Raucherzeuger 60 über die Klappe 2 ansaugt, dann über die optionale Heizung 77 leitet und über die Klappe 3 und der oberen Ionisationseinheit 22 in den Behandlungsraum 31 leitet. Nachdem das Behandlungsmedium durch die Kammer 11 geströmt ist, führt der Rückwärtspfad über die Klappe 8 zurück in den Raucherzeuger 60.

### Rauchphase - Anströmung von unten

Für die Anströmung von unten sind die Klappen 4 und 6 geöffnet. Der Ventilator 51 muss für diesen Richtungswechsel des Behandlungsmediums im Behandlungsraum 31 keine Drehrichtungsänderung machen.

### Trocknungsphase - Anströmung von unten

Bei der Trocknungsphase wird die Heizung 77 eingeschaltet und der Ventilator zieht einen Teil Frischluft über die Klappe 7, als auch einen Teil des zirkulierenden Behandlungsmediums über die Umluftzirkulationsklappe 5. Damit die Feuchtigkeit in der Umluft entweichen kann und kein Überdruck im Gesamtsystem entsteht, wird gleichzeitig die Klappe 1 geöffnet, über welche ein Teil des Behandlungsmediums entweichen kann.

### Phase vor der Entleerung

Vor der Entleerung der Kammer 11, insbesondere des Behandlungsraums 31, kann das Behandlungsmedium sich im Kreislauf z.B. über die Klappen 4, 6, 5 "totlaufen". Nach einer kurzen Zeit haben sich alle Partikel niedergeschlagen. Und der Behandlungsraum 31 kann über Abluftklappe 1 sowie der Frischluftklappe 7 entleert werden.

### Anwendungsbeispiel 2: Alternierender Betrieb mit bidirektionalem Ventilator:

Optional kann auch ein bidirektionaler Ventilator 71 eingebaut werden welcher direkt oberhalb der oberen Ionisationseinheit 22 eingebaut werden kann. Dies kann für die automatische Abreinigung gewisse Vorteile bieten, da der Ventilator 71 und der Umlaufkanal 45 mit Klappe 5' im gleichen Prozess abgereinigt werden kann (gleiche Abreinigungsdüse und Ablaufsystem). Voraussetzung für diesen Aufbau ist, dass Vor- und Rücklauf (Kanäle 73 und 74) des Rauerzeugers 60 alternierend aufgebaut ist.

### Rauchphase - Anströmung von oben

Bei der Anströmung von oben drückt der Ventilator 71 das Behandlungsmedium durch ein Heizelement (optional), eine Sprühdüse (optional), ein Dampferzeuger (optional) und anschliessend über die Ionisationseinheit in den Behandlungsraum. Die Reihenfolge ist beliebig. Über die Klappe 2' wir der Rauch dem Raucherzeuger 60 zurückgeführt.

### Rauchphase - Anströmung von unten

Bei einer Richtungsumkehrung des Behandlungsmediums muss die Drehrichtung des Ventilators gedreht werden und entsprechend die untere Ionisationseinheit 24 eingeschaltet werden. Die Klappenstellungen bleiben die gleichen. Hier wird das Behandlungsmedium aus dem Raum gesaugt.

### Trocknungsphase - Anströmung von unten

Bei der Trocknungsphase wird die Räucherkammer 11" von unten nach oben durchströmt. Dabei wird die Abluftklappe 1' leicht geöffnet. Ebenfalls wird die Klappe 5' und 7' leicht geöffnet. Die Klappe 2' zum Raucherzeuger 60 bleibt geschlossen. über die Klappe 7' saugt der Ventilator 71 Frischluft an. Da die Umluftklappe 5' einen leichten Überdruck erzeugt, wird automatisch ein Teil des Behandlungsmediums über die Abluftklappe 1' entweichen.

### Totlaufphase - Anströmung von oben

Vor dem Leeren der Rauchkammer 11" kann sich der Rauch über die Umluftklappe 5' totlaufen. Idealerweise wird dann bei Anströmung von oben die untere Ionisationseinheit 24 eingeschaltet, so dass die Abscheidewirkung nicht auf dem Behandlungsgut 13, sondern im Umlaufkanal 72 mit der Klappe 5' stattfindet. Da sich dieser Kanal 72 in der Rauchkammer 60 befindet bzw. von der Rauchkammer aus zugänglich ist, lässt er sich leicht reinigen.

### Totlaufphase - mit integriertem Elektrofilter im Rücklaufkanal

Das "totlaufen" im Umlaufkanal 72 kann durch den Einsatz von mindestens einer oder mehreren Hochspannungselektrode in diesem Kanal 72 erheblich verkürzt werden. In diesem Fall wirkt der Umlaufkanal 72, als integrierter Elektrofilter 78, welcher mit derselben Abreinigungseinheit wie der Behandlungsraum gereinigt werden kann (Fig. 4).

### BEZUGSZEICHENLISTE

- 1, 1': Klappe, bzw. Abluftklappe
- 2, 2': Klappe, bzw. Rauchklappe
- 3: Klappe
- 4: Klappe
- 5, 5': Klappe, bzw. Umluftzirkulationsklappe
- 6: Klappe
- 7, 7': Klappe, bzw. Frischluftklappe
- 8: Klappe
- 11, 11',11",11‴: Kammer, bzw. Räucherkammer
- 12: Transportwagen, zum chargeweisen Beladen der Kammer
- 13: Behandlungsgut
- 15: oberer Kammerbereich
- 17, 17': erste Öffnung
- 18: erstes Lochblech
- 19: unterer Kammerbereich
- 20: zweites Lochblech
- 22: erste Ionisationseinheit
- 21, 21': zweite Öffnung
- 23, 23‴: erste Elektrode
- 24: zweite Ionisationseinheit
- 25, 25‴: zweite Elektrode
- 27, 27‴: erstes Gitter oder Lochblech
- 29, 29‴: zweites Gitter oder Lochblech
- 31: Behandlungsraum
- 33: Trasse, Schiene
- 41: Sprühdüse
- 43: Heizung
- 45: Führungssystem
- 51: unidirektionaler Ventilator
- 53: erster Kanal
- 55: zweiter Kanal
- 57: dritter Kanal
- 59: Transferkanal
- 60: Raucherzeuger
- 61: Rücklaufkanal
- 63: Vorlaufkanal
- 65: Frischluftzulass
- 67: Abluftablass
- 70: Führungssystem
- 71: Bidirektionaler Ventilator
- 72: Kanal, Zirkulationskanal
- 73: Kanal
- 74: Kanal
- 75: Abluftöffnung, bzw. Abluftablass
- 76: Frischluftzulass
- 77: Heizungselement
- 78: Elektrofilter
- 80, 80', 80", 80‴, 80"", 80ʺ‴: Ionisationseinheit
- 83: ungeladene Partikel
- 84: geladene Partikel, bzw. Ladungsträger
- 85, 85', 85", 85‴, 85ʺʺ, 85ʺ‴: Elektrode, insb. Hochspannungselektrode
- 86: Strömungsrichtung des Behandlungsmediums
- 87, 87', 87", 87‴, 87ʺʺ, 87ʺ‴: Hochspannungsisolator
- 89, 89', 89", 89'", 89"", 89ʺ‴: Gegenelektrode
- 91: Blende
- 93: Sägezahnleiste
- 94: Draht oder Feinseil
- 95: Spitzen, z.B. Nägel
- 101, 101': Träger für Lochblech
- 103, 103': Träger für Gitter

## Patentansprüche

1. Eine elektrostatische Räucheranlage, beinhaltend
- eine Kammer (11, 11', 11", 11‴) mit einer ersten Öffnung (17, 17') und einer zweiten Öffnung (21, 21') zur Durchströmung der Kammer mit einem Behandlungsmedium entlang einer Strömungsstrecke,
- in der Kammer (11, 11', 11", 11‴) auf der Strömungsstrecke einen Behandlungsraum (31), welcher für die Aufnahme von Behandlungsgut (13) vorgesehen ist,
- einen Raucherzeuger (60) zur Anreicherung des Behandlungsmediums mit Rauch,
- ein Führungssystem (45, 70) zur Beförderung des Behandlungsmediums in die Kammer (11,11', 11", 11‴) hinein und aus der Kammer (11, 11', 11", 11‴) heraus,
- eine erste Elektrode (23, 23‴), insbesondere eine erste Ionisationseinheit (22, 80, 80', 80", 80‴, 80"", 80ʺ‴) beinhaltend die erste Elektrode (23, 23‴), zur Ionisierung des Behandlungsmediums,
**dadurch gekennzeichnet, dass**
- das Führungssystem mit einem Umlaufkanal (72, 55) ausgerüstet ist, welcher die erste Öffnung (17, 17') mit der zweiten Öffnung (21, 21') verbindet,
- der Umlaufkanal (72, 55) derart angelegt ist, dass über diesen das Behandlungsmedium nach einem Durchlauf durch den Behandlungsraum (31) für mindestens einen weiteren Durchlauf durch den Behandlungsraum (31) erneut in den Behandlungsraum (31) geführt werden kann, und
- der Umlaufkanal (72, 55) in Beziehung zur ersten Elektrode (23, 23'"), insbesondere in Beziehung zur ersten Ionisationseinheit (22, 80, 80', 80", 80‴, 80ʺʺ, 80ʺ‴), derart angelegt ist, dass das Behandlungsmedium nach dem Durchlauf durch den Behandlungsraum (31) über die erste Elektrode (23,23‴) bzw. die erste Ionisationseinheit (22, 80, 80', 80", 80'", 80"", 80ʺ‴) geführt wird, bevor das Behandlungsmedium erneut in den Behandlungsraum (31) gelangt.

2. Die elektrostatische Räucheranlage nach Anspruch 1, **dadurch gekennzeichnet, dass** die erste Elektrode (23, 23‴), insbesondere die erste Ionisationseinheit (22, 80, 80', 80", 80‴, 80"", 80ʺ‴), auf der Strömungsstrecke in der Kammer (11, 11', 11", 11‴) zwischen der ersten Öffnung (17,17') und dem Behandlungsraum (31) oder im Umlaufkanal (72, 55) derart angeordnet ist, dass die erste Elektrode (23, 23‴) bzw. die erste Ionisationseinheit (22, 80, 80', 80", 80‴, 80ʺʺ, 80ʺ‴) vom Behandlungsmedium durchströmt bzw. angeströmt wird.

3. Die elektrostatische Räucheranlage nach einem der vorangehenden Ansprüche 1 oder 2, **dadurch gekennzeichnet, dass** eine zweite Elektrode (25, 25‴), insbesondere eine zweite Ionisationseinheit (24, 80, 80', 80", 80'", 80ʺʺ, 80ʺ‴) beinhaltend die zweite Elektrode (25, 25‴), auf der Strömungsstrecke in der Kammer (11,11', 11", 11‴) zwischen der zweiten Öffnung (21, 21') und dem Behandlungsraum (31) oder im Umlaufkanal (72, 55) derart angeordnet ist, dass die zweite Elektrode (25, 25‴) bzw. die zweite Ionisationseinheit (24, 80, 80', 80", 80‴, 80ʺʺ, 80ʺ‴) vom Behandlungsmedium durchströmt bzw. angeströmt wird, und optional **dadurch gekennzeichnet, dass** die Anlage ausgestaltet ist, um zum einen das Behandlungsmedium auf die erste Elektrode (23, 23‴) und weiter durch den Behandlungsraum (31) auf die zweite Elektrode (25, 25‴) zu führen und zum anderen in umgekehrter Richtung das Behandlungsmedium auf die zweite Elektrode (25, 25‴) und weiter durch den Behandlungsraum (31) auf die erste Elektrode (23, 23‴) zu führen.

4. Die elektrostatische Räucheranlage nach einem der vorangehenden Ansprüche 1 bis 3, **dadurch gekennzeichnet,**
- **dass** der Umlaufkanal (72, 55) in Beziehung zur ersten Elektrode (23, 23‴) und/oder zweiten Elektrode (25, 25‴), insbesondere in Beziehung zur ersten Ionisationseinheit (22, 80, 80', 80", 80‴, 80ʺʺ, 80ʺ‴) und/oder zweiten Ionisationseinheit (24, 80, 80', 80", 80‴, 80ʺʺ, 80ʺ‴), derart angelegt ist, dass das Behandlungsmedium nach dem Durchlauf durch den Behandlungsraum (31) über die erste Elektrode (23, 23‴) und/oder zweite Elektrode (25, 25‴) bzw. die erste Ionisationseinheit (22, 80, 80', 80", 80‴, 80ʺʺ, 80ʺ‴) und/oder zweite Ionisationseinheit (24, 80, 80', 80", 80‴, 80ʺʺ, 80ʺ‴) geführt wird, bevor das Behandlungsmedium erneut in den Behandlungsraum (31) gelangt; und/oder
- **dass** das Führungssystem derart ausgeführt ist, dass das Behandlungsmedium wahlweise oder wechselweise durch die erste Öffnung (17, 17') oder die zweite Öffnung (21, 21') in Richtung Behandlungsraum (31) geleitet wird.

5. Die elektrostatische Räucheranlage nach einem der vorangehenden Ansprüche 1 bis 4, **dadurch gekennzeichnet, dass** der zumindest einen ersten Elektrode (23, 23‴, 85) und gegebenenfalls einer zweiten Elektrode (25, 25‴) jeweils eine als Gegenelektrode wirkende weitere Elektrode (27, 29, 89) zugeordnet ist, wobei vorzugsweise die als Gegenelektrode wirkende weitere Elektrode (27, 29, 89) als Netz oder Gitter ausgebildet ist.

6. Die elektrostatische Räucheranlage nach einem der vorangehenden Ansprüche 1 bis 5, **dadurch gekennzeichnet, dass** das Führungssystem (45) zur wahlweisen oder wechselweisen Beförderung des Behandlungsmediums
- mit einem unidirektionalen Ventilator ausgerüstet ist und weiter vorzugsweise mit zwei Strömungskreisläufen ausgerüstet ist, welche wechselweise über den Ventilator zur Strömungsumkehr in der Behandlungskammer beströmt werden oder
- mit einem bidirektionalen Ventilator zur Strömungsumkehr in der Behandlungskammer ausgerüstet ist und optional weiter mit einem umkehrbare Vor- und Rücklaufsystem des Raucherzeugers ausgerüstet ist.

7. Elektrostatische Räucheranlage nach einem der Ansprüche 1 bis 6 **dadurch gekennzeichnet, dass** die erste und/oder gegebenenfalls zweite Ionisationseinheit (80ʺ‴) aufgebaut ist aus zumindest
- der ersten bzw. zweiten Elektrode (23‴, 25‴, 85ʺ‴), insbesondere einer Hochspannungselektrode,
- einer als Gegenelektrode wirkenden weiteren Elektrode (89ʺ‴),
- einem Isolator (87ʺ‴) für die erste bzw. zweite Elektrode (23‴, 25‴, 85ʺ‴) und
- einem Spannungsgenerator, vorzugsweise einem Hochspannungsgenerator zur Beaufschlagung der ersten bzw. zweiten Elektrode (23‴, 25'", 85ʺ‴) mit einer Spannung bzw. Hochspannung,
- wobei die erste bzw. zweite Elektrode (23‴, 25‴, 85ʺ‴) als Stabelektrode ausgeführt ist; und
- wobei optional vorzugsweise die als Gegenelektrode wirkende weitere Elektrode (89ʺ‴) als Rohr oder Rohrabschnitt, insbesondere als Rohrabschnitt des Führungssystems bzw. des Umlaufkanals, ausgeführt ist und die als Stabelektrode ausgeführte erste bzw. zweite Elektrode (85ʺ‴) zentriert in der weiteren Elektrode (89ʺ‴) angeordnet ist, wobei die erste bzw. zweite Elektrode mittels des Isolators (87ʺ‴) von der weiteren Elektrode elektrisch isoliert ist.

8. Elektrostatische Räucheranlage nach einem der Ansprüche 1 bis 6 **dadurch gekennzeichnet, dass** die erste und/oder gegebenenfalls zweite Ionisationseinheit (22, 24, 80, 80', 80", 80'", 80"") aufgebaut ist aus zumindest
- der ersten bzw. zweiten Elektrode (23, 25, 85, 85', 85", 85"', 85""), insbesondere einer Hochspannungselektrode,
- einer als Gegenelektrode wirkenden weiteren Elektrode (27, 29, 89, 89', 89", 89‴, 89ʺʺ),
- einem Isolator (87, 87', 87", 87‴, 87ʺʺ) für die erste bzw. zweite Elektrode (23, 25, 85, 85', 85", 85‴, 85"") und
- einem Spannungsgenerator, vorzugsweise einem Hochspannungsgenerator (81), zur Beaufschlagung der ersten bzw. zweiten Elektrode (23, 25, 85, 85', 85", 85‴, 85"") mit einer Spannung bzw. Hochspannung,
wobei die erste bzw. zweite Elektrode (23, 25, 85, 85', 85", 85‴, 85ʺʺ) und die als Gegenelektrode (27, 29, 89, 89', 89", 89‴, 89"") wirkende weitere Elektrode als Flächenelektroden ausgeführt sind, welche gegeneinander parallel ausgerichtet sind und eine Vielzahl von Durchströmungsaussparungen aufweisen.

9. Elektrostatische Räucheranlage nach Anspruch 8, **dadurch gekennzeichnet, dass** die erste bzw. zweite Elektrode (23, 25, 85, 85', 85", 85‴, 85"") über ihre Flächenausdehnung mit einer Vielzahlt von Erhebungen, insbesondere Spitzen, besetzt ist, wobei vorzugsweise die Erhebungen auf jener Seite der Elektrode (23, 25, 85, 85', 85‴, 85"") angelegt sind, welche zur ihr zugeordneten Gegenelektrode (27, 29, 89, 89', 89‴, 89"") gerichtet ist.

10. Elektrostatische Räucheranlage nach einem der Ansprüche 8 oder 9, **dadurch gekennzeichnet,**
- **dass** Elektrode (23, 25, 85, 85', 85", 85‴, 85"", 85ʺ‴) und Gegenelektrode (27, 29, 89, 89', 89", 89‴, 89"", 89ʺ‴) in paralleler bzw. planparalleler Konfiguration angeordnet sind und/oder
- **dass** die Gegenelektrode (27, 29, 89, 89', 89", 89‴, 89"") als Gitter oder Netz ausgeführt ist.

11. Elektrostatisches Räucherverfahren beinhaltend die aufeinanderfolgenden Verfahrensschritte
- Strömen eines nach Rauchaufnahme Rauch enthaltenden und ionisierten Behandlungsmediums über die Oberfläche eines Behandlungsgutes in einem Behandlungsraum (31) einer Behandlungskammer (11, 11', 11", 11‴) und
- ein- oder mehrmaliges Zirkulieren des Behandlungsmediums aus der Behandlungskammer durch einen Umlaufkanal zurück in die Behandlungskammer und über die Oberfläche des Behandlungsgutes im Behandlungsraum (31),
wobei das Behandlungsmedium nach dem Durchlauf durch den Behandlungsraum (31) über die erste Elektrode (23, 23'") bzw. die erste Ionisationseinheit (22) geführt wird, bevor das Behandlungsmedium erneut in den Behandlungsraum (31) gelangt.

12. Das elektrostatisches Räucherverfahren nach Anspruch 11, **dadurch gekennzeichnet, dass** das Zirkulieren, insbesondere das mehrmalige Zirkulieren, des Behandlungsmediums mit oder ohne zusätzlicher Rauchaufnahme unter Aktivierung mindestens einer ionisierenden Elektrode, welche im Zirkulationsweg angeordnet ist, abläuft.

13. Das elektrostatisches Räucherverfahren nach Anspruch 12, **dadurch gekennzeichnet, dass** während dem Verfahrensschritt der Zirkulation des Behandlungsmediums ohne zusätzliche Rauchaufnahme unter Aktivierung mindestens einer ionisierenden Elektrode die mindestens eine aktivierte ionisierende Elektrode in der Behandlungskammer (11,11', 11", 11‴) in Strömungsrichtung dem Behandlungsgut (13) vor- und/oder nachgestellt, vorzugsweise vorgestellt ist.

14. Das elektrostatisches Räucherverfahren nach einem der vorangehenden Ansprüche 11 bis 12, **gekennzeichnet durch** ein Umlenken der Strömungsrichtung in der Behandlungskammer in die Gegenrichtung, insbesondere mehrmaliges Umlenken, unter Rauchaufnahme bei gleichzeitigem Aktivieren einer ionisierenden Elektrode, welche in Strömungsrichtung vor dem Behandlungsgut (13) angeordnet ist, vorzugsweise welche in der Behandlungskammer (11,11', 11", 11‴) in Strömungsrichtung dem Behandlungsgut (13) vorgestellt ist.

15. Das elektrostatisches Räucherverfahren nach einem der vorangehenden Ansprüche 11 bis 14, wobei der Verfahrensschritt des Zirkulierens fortgeführt wird bis im Wesentlichen alle Partikel abgeschieden sind bevor das Ablassen des Behandlungsmediums über eine Abluftklappe folgt.

## Claims

1. Electrostatic smoking installation comprising:
- a chamber (11, 11', 11", 11‴) with a first opening (17, 17') and a second opening (21, 21') for the throughflow in the chamber of a treatment medium along a flow path,
- in the chamber (11, 11', 11", 11‴) on the flow path a treatment space (31) that is provided for receiving material to be treated (13),
- a smoke generator (60) for enriching the treatment medium with smoke,
- a guide system (45, 70) for conveying the treatment medium into the chamber (11, 11', 11", 11‴) and out of the chamber (11, 11', 11", 11‴),
- a first electrode (23, 23‴), in particular a first ionization unit (22, 80, 80', 80", 80'", 80ʺʺ, 80ʺ‴) containing the first electrode (23, 23‴), for ionizing the treatment medium,
**characterized in that**
- the guide system is equipped with a circulation channel (72, 55) that connects the first opening (17, 17') to the second opening (21, 21'),
- the circulation channel (72, 55) is designed in such a manner that the material to be treated can be guided thereby after passing through the treatment space (31) for at least one further passing through the treatment space (31) again into the treatment space (31) and
- the circulation channel (72, 55) is designed with respect to the first electrode (23, 23‴), in particular with respect to the first ionization unit (22, 80, 80', 80", 80'", 80ʺʺ, 80ʺ‴), that the treatment medium after passing through the treatment space (31) can be guided via the first electrode (23, 23‴) or the first ionization unit (22, 80, 80', 80", 80'", 80ʺʺ, 80ʺ‴) before the treatment medium enters again the treatment space.

2. Electrostatic smoking installation according to claim 1, **characterized in that** the first electrode (23, 23‴), in particular the first ionization unit (22, 80, 80', 80", 80'", 80"", 80ʺ‴), is arranged in the flow path in the chamber (11, 11', 11", 11‴) between the first opening (17, 17') and the treatment space (31) or in the circulation channel (72, 55) so that the first electrode (23, 23‴) or the first ionization unit (22, 80, 80', 80", 80‴, 80ʺʺ, 80ʺ‴) is flowed through or flowed over by the treatment medium.

3. Electrostatic smoking installation according to one of the preceding claims 1 or 2, **characterized in that** a second electrode (25, 25‴), in particular a second ionization unit (24, 80, 80', 80", 80'", 80ʺʺ, 80ʺ‴) containing the second electrode (25, 25‴), is arranged on the flow path in the chamber (11, 11', 11", 11‴) between the second opening (21, 21') and the treatment space (31) or in the circulation channel (72, 55) so that the second electrode (25, 25‴) or the second ionization unit (24, 80, 80', 80", 80'", 80ʺʺ, 80ʺ‴) is flowed through or flowed over by the treatment medium and optionally **characterized in that** the installation is designed in order to guide on the one hand the treatment medium to the first electrode (23, 23‴) and further through the treatment space (31) to the second electrode (25, 25‴) and on the other hand in reverse direction to guide the treatment medium to the second electrode (25, 25‴) and further through the treatment space (31) to the first electrode (23, 23‴).

4. Electrostatic smoking installation according to one of the preceding claims 1 to 3, **characterized in**
- **that** the circulation channel (72, 55) is designed with respect to the first electrode (23, 23‴) and/or to the second electrode (25, 25‴), in particular with respect to the first ionization unit (22, 80, 80', 80", 80'", 80ʺʺ, 80ʺ‴) and/or to the second ionization unit (24, 80, 80', 80", 80'", 80"", 80ʺ‴), that the treatment medium after passing through the treatment space (31) is guided via the first electrode (23, 23‴) and/or the second electrode (25, 25‴) or the first ionization unit (22, 80, 80', 80", 80'", 80ʺʺ, 80ʺ‴) and/or to the second ionization unit (24, 80, 80', 80", 80'", 80ʺʺ, 80ʺ‴) before the treatment medium enters again the treatment space and/or
- **that** the guide system is designed in such a manner that the treatment medium is optionally or alternately guided through the first opening (17, 17') or the second opening (21, 21') in direction of the treatment space (31).

5. Electrostatic smoking installation according to one of the preceding claims 1 to 4, **characterized in that** a further electrode (27, 29, 89) acting as a counter electrode is respectively associated to the at least one first electrode (23, 23‴, 85) and if need be to a second electrode (25, 25‴), wherein preferably the further electrode (27, 29, 89) acting as a counter electrode is configured as a mesh or a grid.

6. Electrostatic smoking installation according to one of the preceding claims 1 to 5, **characterized in that** the guide system (45) is equipped for the optional or alternate conveying of the treatment medium
- with an unidirectional ventilator and is further preferably equipped with two flow circuits that are alternately flowed by the ventilator for the flow reversal in the treatment chamber
or
- with a bidirectional ventilator for the flow reversal in the treatment chamber and is optionally further equipped with a reversible flow and return system of the smoke generator.

7. Electrostatic smoking installation according to one of the preceding claims 1 to 6, **characterized in that** the first and/or if any the second ionization unit (80ʺ‴) is constituted by at least
- the first or the second electrode (23‴, 25'", 85ʺ‴), in particular a high voltage electrode,
- a further electrode (89ʺ‴) acting as a counter electrode,
- an insulator (87ʺ‴) for the first or second electrode (23‴, 25'", 85ʺ‴) and
- a voltage generator, preferably a high voltage generator for charging the first or second electrode (23‴, 25'", 85ʺ‴) with a voltage or a high voltage,
- wherein the first or second electrode (23‴, 25'", 85ʺ‴) is designed as a rod electrode and
- wherein optionally preferably the further electrode (89ʺ‴) acting as a counter electrode is designed as a tube or a tube section, in particular as a tube section of the guide system or of the circulation channel, and the first or the second electrode (85ʺ‴) is arranged centered in the further electrode (89ʺ‴), wherein the first or the second electrode (87ʺ‴) is electrically insulated by the further electrode.

8. Electrostatic smoking installation according to one of the preceding claims 1 to 6, **characterized in that** the first and/or if any the second ionization unit (22, 24, 80, 80', 80", 80‴, 80ʺʺ, 80ʺ‴) is constituted by at least
- the first or the second electrode (23, 25, 85, 85', 85", 85‴, 85""), in particular a high voltage electrode,
- a further electrode (27, 29, 89, 89', 89", 89'", 89"") acting as a counter electrode,
- an insulator (87, 87',87", 87'", 87"") for the first or second electrode (23, 25, 85, 85', 85", 85'", 85"") and
- a voltage generator, preferably a high voltage generator for charging the first or second electrode (23, 25, 85, 85', 85", 85'", 85"") with a voltage or a high voltage,
- wherein the first or second electrode (23, 25, 85, 85', 85", 85'", 85"") and the further electrode (27, 29, 89, 89', 89", 89'", 89"") acting as a counter electrode are designed as surface electrodes that are oriented parallel against each other and have a multitude of through-flow recesses.

9. Electrostatic smoking installation according to claim 8, **characterized in that** the first or the second electrode (23, 25, 85, 85', 85", 85'", 85"") is set with a multitude of elevations, in particular of tips, over its surface extension, wherein preferably the elevations are set on the side of the electrode (23, 25, 85, 85', 85", 85'", 85"") that is directed to the associated counter electrode (27, 29, 89, 89', 89", 89'", 89"").

10. Electrostatic smoking installation according to one of the claims 8 or 9, **characterized in**
- **that** the electrode (23, 25, 85, 85', 85", 85'", 85"") and the counter electrode (27, 29, 89, 89', 89", 89'", 89"") are arranged in a parallel or planar parallel configuration and/or
- **that** the counter electrode (27, 29, 89, 89', 89", 89'", 89"") is configured as a mesh or a grid.

11. Electrostatic smoking method comprising the successive method steps:
- flowing of a ionized treatment medium containing smoke after smoke input over the surface of a material to be treated in a treatment space (31) of a treatment chamber (11, 11', 11", 11‴) and
- a single or multiple circulation of the treatment medium from the treatment chamber through a circulation channel back into the treatment chamber and over the surface of the material to be treated in the treatment space (31), wherein the treatment medium is guided after the passage through the treatment space (31) over the first electrode (23, 23‴) or the first ionization unit (22) before the treatment medium enters again the treatment space (31).

12. Electrostatic smoking method according to claim 11, **characterized in that** the circulation, in particular the multiple circulation of the treatment medium with or without additional smoke input takes place under activation of at least one ionizing electrode that is arranged in the circulation path.

13. Electrostatic smoking method according to claim 12, **characterized in that** during the method step of circulation of the treatment medium without additional smoke input under activation of at least one ionizing electrode the at least one activated ionizing electrode in the treatment chamber (11, 11', 11", 11‴) is arranged in flow direction in front of and/or behind the material to be treated (13), preferable in front thereof.

14. Electrostatic smoking method according to one of the preceding claims 11 to 12, **characterized by** a redirection of the flow direction in the treatment chamber in the opposite direction, in particular multiple redirection under smoke input with a simultaneous activation of an ionizing electrode that is arranged in flow direction in front of the material to be treated (13), preferably that is arranged in the treatment chamber (11, 11', 11", 11‴) in flow direction in front of the material to be treated (13).

15. Electrostatic smoking method according to one of the preceding claims 11 to 14, wherein the method step of the circulation continues until substantially all the particles are separated before the discharge of the material to be treated via an exhaust air flap follows.

## Revendications

1. Fumoir électrostatique comprenant :
- une enceinte (11, 11', 11", 11‴) avec une première ouverture (17, 17') et une seconde ouverture (21, 21') pour la traversée en continu de l'enceinte avec un milieu de traitement le long d'un chemin d'écoulement,
- dans l'enceinte (11, 11', 11", 11‴) sur le chemin d'écoulement un espace de traitement (31) qui est prévu pour la réception de matière à traiter (13),
- un générateur de fumée (60) pour enrichir le milieu de traitement avec de la fumée,
- un système de conduction (45, 70) pour l'acheminement du milieu de traitement entrant dans l'enceinte (11, 11', 11", 11‴) et sortant de l'enceinte (11, 11', 11", 11‴),
- une première électrode (23, 23'"), en particulier une première unité d'ionisation (22, 80, 80', 80", 80‴, 80"", 80'"") contenant la première électrode (23, 23'") pour l'ionisation du milieu de traitement,
**caractérisé en ce que**
- le système de conduction est équipé d'un canal de circulation (72, 55) qui relie la première ouverture (17, 17') à la seconde ouverture (21, 21'),
- le canal de circulation (72, 55) est installé de telle manière que le milieu de traitement peut être conduit par celui-ci après un passage à travers l'espace de traitement (31) pour au moins un autre passage à travers l'espace de traitement (31) à nouveau dans l'espace de traitement (31) et
- le canal de circulation (72, 55) est installé par rapport à la première électrode (23, 23‴), en particulier par rapport à la première unité d'ionisation (22, 80, 80', 80", 80‴, 80"", 80""') de telle manière que le milieu de traitement est conduit après le passage à travers l'espace de traitement (31) par la première électrode (23, 23'") ou par la première unité d'ionisation (22, 80, 80', 80", 80‴, 80"", 80""') avant que le milieu de traitement arrive de nouveau dans l'espace de traitement (31).

2. Fumoir électrostatique selon la revendication 1, **caractérisé en ce que** la première électrode (23, 23'"), en particulier la première unité d'ionisation (22, 80, 80', 80", 80‴, 80"", 80'""), est placée sur le chemin d'écoulement dans l'enceinte (11, 11', 11", 11‴) entre la première ouverture (17, 17') et l'espace de traitement (31) ou dans le canal de circulation (72, 55) de telle manière que la première électrode (23, 23'"), ou la première unité d'ionisation (22, 80, 80', 80", 80‴, 80"", 80""') est traversée ou léchée par le milieu de traitement.

3. Fumoir électrostatique selon l'une des revendications précédentes 1 ou 2, **caractérisé en ce que** la seconde électrode (25, 25'"), en particulier une seconde unité d'ionisation (24, 80, 80', 80", 80'", 80"", 80""') qui contient la seconde électrode (25, 25'") est placée sur le chemin d'écoulement dans l'enceinte (11, 11', 11", 11‴) entre la seconde ouverture (21, 21') et l'espace de traitement (31) ou dans le canal de circulation (72, 55) de telle manière que la seconde électrode (25, 25'"), ou la seconde unité d'ionisation (24, 80, 80', 80", 80‴, 80"", 80""') est traversée ou léchée par le milieu de traitement et caractérisé en option **en ce que** le fumoir est configuré pour conduire d'une part le milieu de traitement sur la première électrode (23, 23'") et ensuite à travers l'espace de traitement (31) sur la seconde électrode (25, 25'") et d'autre part en sens inverse pour conduire le milieu de traitement sur la seconde électrode (25, 25'") et ensuite à travers l'espace de traitement (31) sur la première électrode (23, 23'").

4. Fumoir électrostatique selon l'une des revendications précédentes 1 à 3, **caractérisé en ce**
- **que** le canal de circulation (72, 55) est installé par rapport à la première électrode (23, 23'") et/ou la seconde électrode (25, 25'"), en particulier par rapport à la première unité d'ionisation (22, 80, 80', 80", 80'", 80"", 80""') et/ou à la seconde unité d'ionisation (24, 80, 80', 80", 80‴, 80"", 80'""), de telle manière que le milieu de traitement est conduit après le passage à travers l'espace de traitement (31) par la première électrode (23, 23'") et/ou la seconde électrode (25, 25'") ou la première unité d'ionisation (22, 80, 80', 80", 80'", 80"", 80""') et/ou la seconde unité d'ionisation (24, 80, 80', 80", 80'", 80"", 80ʺ‴) avant que le milieu de traitement n'arrive à nouveau dans l'espace de traitement (31) et/ou
- **que** le système de conduction est réalisé de telle manière que le milieu de traitement est conduit au choix ou en alternance à travers la première ouverture (17, 17') ou la seconde ouverture (21, 21') en direction de l'espace de traitement (31).

5. Fumoir électrostatique selon l'une des revendications précédentes 1 à 4, **caractérisé en ce qu'**une électrode supplémentaire (27, 29, 89) agissant comme électrode antagoniste est associée respectivement à la au moins une première électrode (23, 23'", 85) et le cas échéant à une seconde électrode (25, 25'"), cependant que de préférence l'électrode supplémentaire agissant comme électrode antagoniste (27, 29, 89) est configurée comme un filet ou une grille.

6. Fumoir électrostatique selon l'une des revendications précédentes 1 à 5, **caractérisé en ce que** le système de conduction est équipé pour l'acheminement en option ou en alternance du milieu de traitement
- d'un ventilateur unidirectionnel et de plus de préférence de deux circuits d'écoulement qui sont atteints en alternance par le flux du ventilateur pour l'inversion de l'écoulement dans l'enceinte de traitement
ou
- d'un ventilateur bidirectionnel pour l'inversion de l'écoulement dans l'enceinte de traitement et équipé en option de plus d'un système d'avance et de retour du fumoir réversible.

7. Fumoir électrostatique selon l'une des revendications précédentes 1 à 6, **caractérisé en ce que** la première et/ou, le cas échéant, la seconde unité d'ionisation (80ʺ‴) est constituée par au moins
- la première ou la seconde électrode (23'", 25'", 85'""), en particulier une électrode haute tension,
- une électrode supplémentaire (89) agissant comme électrode antagoniste (89ʺ‴),
- un isolateur (87'"") pour la première ou la seconde électrode (23'", 25'", 85""') et
- un générateur de tension, de préférence un générateur haute tension, pour injecter une tension ou une haute tension à première ou la seconde électrode (23‴, 25‴, 85ʺ‴),
- cependant que la première ou la seconde électrode (23‴, 25‴, 85‴ʺ) est réalisée comme une baguette d'électrode et
- cependant qu'en option de préférence l'électrode supplémentaire agissant comme électrode antagoniste (89‴ʺ) est réalisée comme un tube ou une section de tube, en particulier une section de tube du système de conduction ou du canal de circulation et la première ou la seconde électrode (85""') réalisée comme une baguette d'électrode est placée centrée dans l'électrode supplémentaire (89‴ʺ), cependant que la première ou la seconde électrode est isolée électriquement de l'électrode supplémentaire au moyen de l'isolateur (87'"").

8. Fumoir électrostatique selon l'une des revendications précédentes 1 à 6, **caractérisé en ce que** la première et/ou, le cas échéant, la seconde unité d'ionisation (22, 24, 80, 80', 80", 80‴, 80ʺʺ, 80‴ʺ)) est constituée par au moins
- la première ou la seconde électrode (23, 25, 85, 85', 85", 85'", 85""), en particulier une électrode haute tension,
- une électrode supplémentaire (27, 29, 89, 89', 89", 89'", 89"") agissant comme électrode antagoniste,
- un isolateur (87, 87',87", 87'", 87"") pour la première ou la seconde électrode (23, 25, 85, 85', 85", 85'", 85"") et
- un générateur de tension, de préférence un générateur haute tension (81), pour injecter une tension ou une haute tension à la première ou à la seconde électrode (23, 25, 85, 85', 85", 85'", 85""),
- cependant que la première ou la seconde électrode (23, 25, 85, 85', 85", 85'", 85"") et l'électrode supplémentaire (27, 29, 89, 89', 89", 89'", 89"") agissant comme électrode antagoniste sont réalisées comme des électrodes plates qui sont orientées parallèlement l'une par rapport à l'autre et qui présentent une multitude d'évidements d'écoulement.

9. Fumoir électrostatique selon la revendication 8, **caractérisé en ce que** la première ou la seconde électrode (23, 25, 85, 85', 85", 85'", 85"") est garnie sur son extension en surface d'une multitude de reliefs, en particulier de pointes, cependant que de préférence les reliefs sont aménagés sont le côté de l'électrode (23, 25, 85, 85', 85", 85'", 85"") qui est orienté vers l'électrode antagoniste qui lui est associée (27, 29, 89, 89', 89", 89'", 89"").

10. Fumoir électrostatique selon l'une des revendications précédentes 8 ou 9, **caractérisé en ce que**
- l'électrode (23, 25, 85, 85', 85", 85'", 85"") et l'électrode antagoniste (27, 29, 89, 89', 89", 89'", 89"") sont placées en configuration parallèle ou plane et parallèle et/ou
- que l'électrode antagoniste (27, 29, 89, 89', 89", 89'", 89"") est réalisée comme une grille ou un maillage.

11. Procédé de fumaison électrostatique contenant les étapes de procédé successives :
- flux d'un milieu de traitement ionisé et contenant de la fumée après introduction de fumée sur la surface d'une matière à traiter dans un espace de traitement (31) d'une enceinte de traitement (11, 11', 11", 11‴) et
- circulation une ou plusieurs fois du milieu de traitement provenant de l'enceinte de traitement par un canal de circulation de retour dans l'enceinte de traitement et sur la surface de la matière à traiter dans l'espace de traitement (31),
cependant que le milieu de traitement est conduit après avoir traversé l'espace de traitement (31) sur la première électrode (23, 23'") ou la première unité d'ionisation (22) avant que le milieu de traitement arrive à nouveau dans l'espace de traitement (31).

12. Procédé de fumaison électrostatique selon la revendication 11, **caractérisé en ce que** la circulation, en particulier la circulation répétée du milieu de traitement se fait avec ou sans introduction supplémentaire de fumée en activant au moins une électrode ionisante qui est placée dans le trajet de circulation.

13. Procédé de fumaison électrostatique selon la revendication 12, **caractérisé en ce que** pendant l'étape de procédé de la circulation du milieu de traitement sans introduction supplémentaire de fumée en activant au moins une électrode ionisante la au moins une électrode ionisante activée est placée en avant et/ou en arrière de la matière à traiter (13) dans le sens de l'écoulement dans l'enceinte de traitement (11, 11', 11", 11‴), de préférence est placée en avant.

14. Procédé de fumaison électrostatique selon l'une des revendications précédentes 11 à 12, **caractérisé par** une inversion du sens d'écoulement dans l'enceinte de traitement dans le sens inverse, en particulier redirection répétée, avec introduction de fumée lors d'une activation simultanée d'une électrode ionisante qui est placée dans le sens d'écoulement en avant de la matière à traiter (13), de préférence qui est placée en avant de la matière à traiter dans l'enceinte de traitement (11, 11', 11", 11‴) dans le sens de l'écoulement.

15. Procédé de fumaison électrostatique selon l'une des revendications précédentes 11 à 14, cependant que l'étape de procédé de la circulation est poursuivie jusqu'à ce que substantiellement toutes les particules soient séparées avant que l'évacuation du milieu de traitement se fasse par un clapet d'air.
